# EUROPÄISCHE PATENTSCHRIFT

(11) **EP 3 678 908 B1**
(45) Veröffentlichungstag und Bekanntmachung des Hinweises auf die Patenterteilung: **27.07.2022**
(21) Anmeldenummer: 18755759.0
(22) Anmeldetag: 09.08.2018
(51) Int. Cl.: B60T 13/26, B60T 13/38, B60T 13/68, B60T 15/04

(54) **ELEKTROPNEUMATISCHES FESTSTELLBREMSMODUL FÜR NUTZFAHRZEUGE MIT FEDERSPEICHER-FESTSTELLBREMSEN**
ELECTROPNEUMATIC PARKING BRAKE MODULE FOR COMMERCIAL VEHICLES WITH SPRING-LOADED PARKING BRAKES
MODULE DE FREIN DE STATIONNEMENT ÉLECTROPNEUMATIQUE POUR VÉHICULES UTILITAIRES AVEC FREINS DE STATIONNEMENT À RESSORT

(30) Priorität: 05.09.2017 DE 102017008331
(43) Veröffentlichungstag der Anmeldung: 15.07.2020
(73) Patentinhaber: ZF CV Systems Europe BV, 1170 Brussels (BE)
(72) Erfinder: VAN THIEL, Julian, 30938 Grossburgwedel (DE)
(74) Vertreter: Rabe, Dirk-Heinrich
(86) Internationale Anmeldenummer: PCT/EP2018/071623
(87) Internationale Veröffentlichungsnummer: WO 2019/048174

(56) Entgegenhaltungen:
- EP-A1- 2 133 250
- WO-A1-2017/076893
- WO-A1-2018/054513

## Beschreibung

Die Erfindung betrifft ein elektropneumatisches Feststellbremsmodul mit einem Vorratsanschluss zum Anschließen eines Druckluftvorrats, wenigstens einem Federspeicheranschluss zum Anschließen wenigstens eines Federspeicherbremszylinders, und einer elektropneumatischen Einlass-Auslass-Ventileinheit, die wenigstens eine erste Schaltstellung und eine zweite Schaltstellung einnehmen kann.

Solche elektropneumatischen Feststellbremsmodule, auch elektropneumatische Handbrems-Module oder Parkbrems-Module genannt, dienen dazu sogenannte Feststellbremsen, in der Regel Federspeicherbremsen eines pneumatischen Bremssystems für ein Nutzfahrzeug zu betätigen.

Federspeicherbremsen können als Feststellbremsen bzw. Parkbremsen verwendet werden und weisen einen federbelasteten Bremsaktuator auf, der drucklos die Bremse zuspannt, sodass beim drucklosen Zustand das Fahrzeug entsprechend gebremst ist. Zum Lösen der Federspeicherbremsen werden diese mit Druckluft beaufschlagt, sodass die Federspeicherbremsen gegen die Kraft der Feder gelöst werden.

In der Regel verfügen solche elektropneumatischen Feststellbremsmodule daher über einen Vorratsanschluss zum Anschließen eines Druckluftvorrats, und wenigstens einen Federspeicheranschluss zum Anschließen wenigstens eines Federspeicherbremszylinders. Hierbei ist es denkbar, dass an einen einzigen Federspeicheranschluss des elektropneumatischen Feststellbremsmoduls sämtliche Fehlerspeicherbremszylinder des Nutzfahrzeugs, insbesondere des Triebwagens einer Triebfahrzeug-Anhänger-Kombination, angeschlossen sind. Es ist auch möglich, dass hierfür separate Anschlüsse vorgesehen sind. In der Regel nutzen derartige elektropneumatische Feststellbremsmodule ein Relaisventil, um den Federspeicheranschluss und somit die Federspeicherbremszylinder mit einem Volumenstrom zu versorgen. Ferner nutzen sie ein bistabiles Ventil, um im Fahrbetrieb und/oder im geparkten Zustand den Zustand der Federspeicherbremszylinder aufrecht zu erhalten, d.h. entweder einen Belüftungszustand oder Entlüftungszustand, ohne hierzu dauerhaft ein elektromagnetisches Ventil bestromen zu müssen.

Ein solches elektropneumatischen Feststellbremsmodul ist beispielsweise in DE 103 36 611 A1 offenbart. Das Relaisventil ist mit einer Vorsteuereinheit gekoppelt, die über ein elektrisch geschaltetes 2/2-Wegeventil und ein Bistabiles 3/2-Wegeventil einen Steuereingang des Relaisventils mit dem Vorratsanschluss verbindet. Das elektrisch gesteuerte 2/2-Wegeventil dient zum gepulsten Entlüften des Steuereingangs, um die Federspeicher auch zum Hilfsbremsen oder zusätzlichem Einbremsen zu verwenden. Das bistabile 3/2-Wegeventil dient dazu einen be- oder entlüfteten Zustand des Steuereingangs des Relaisventils aufrecht zu erhalten, um den Zustand der Federspeicherbremszylinder aufrecht zu erhalten. Im Fahrbetrieb soll permanent ein Druck an dem Federspeicheranschluss ausgesteuert werden, sodass die Federspeicherbremszylinder gelöst sind. Im abgestellten Zustand des Fahrzeugs allerdings, sollen die Federspeicherbremszylinder zugespannt sein, das heißt entlüftet.

EP 2 615 003 A1 offenbart ein Feststellbremsmodul, bei dem der Federspeicheranschluss über ein Relais-Ventil belüftet wird. Der Steuereingang des Relais-Ventils ist mit einer elektropneumatisch gesteuerten Einlass-Auslass-Ventileinheit gekoppelt, wobei zwischen diesen und dem Steuereingang ein Halteventil eingesetzt ist. Das Halteventil dient zum Halten des Feststellbremsdrucks. das Halteventil ist als monostabiles 2/2-Wege-Ventil ausgebildet und muss daher bestromt werden, um geschlossen zu bleiben, sodass der Federspeicherbremsdruck eingeschlossen ist. Stromlos fällt das Halteventil in den geöffneten Zustand, sodass der Federspeicheranschluss entlüftet bleibt.

Weiterhin ist aus EP 2 121 397 A1 ein Feststellbremsmodul mit einem ebensolchen Aufbau bekannt. Auch das dort offenbarte Feststellbremsmodul weist ein Relais-Ventil sowie ein monostabiles 2/2-Wege-Ventil als Halteventil auf.

Die WO 2017/076893 A1 offenbart eine pneumatische Bremseinrichtung mit einer Ventileinrichtung, die derart verschaltbar ist, dass bei einem Absinken des Systemdrucks zur Versorgung einer Parkbremse eines Anhängers die Parkbremse des Anhängers aktivierbar ist.

Die EP 2 133 250 A1 offenbart eine Parkbremsventilanordnung für ein Nutzfahrzeug, ausgelegt, in einer ersten Parkbremsbetriebsart Parkbremsen des Nutzfahrzeugs zu betätigen und einen Anschluss zu einer Anhängersteuerventilanordnung so mit Druck zu beaufschlagen, dass Parkbremsen eines angeschlossenen Anhängers ebenfalls betätigt werden; und in einer zweiten Parkbremsbetriebsart die Parkbremsen des Nutzfahrzeugs zu betätigen und den Anschluss so mit Druck zu beaufschlagen, dass die Parkbremsen des Anhängers nicht betätigt werden.

Da es nicht gewünscht ist, das Halteventil permanent im Fahrbetrieb zu bestromen, um den Zustand der Federspeicherbremszylinder aufrechtzuerhalten, insbesondere einen belüfteten Zustand aufrechtzuerhalten, besteht der Bedarf ein elektropneumatisches Feststellbremsmodul anzugeben, das einerseits ohne Bestromung den Belüftungszustand bzw. Entlüftungszustand des Federspeicheranschlusses aufrechtzuerhalten kann und gleichzeitig auf die Verwendung eines bistabilen Ventils verzichtet. Vorzugsweise wird ferner auf das Relais-Ventil verzichtet, da dieses großbauend und komplex im Aufbau ist. Daher besteht auch hier Bedarf, das Relais-Ventil möglichst nicht zu verwenden.

Die Erfindung löst die Aufgabe bei einem elektropneumatischen Feststellbremsmodul der eingangs genannten Art dadurch, dass in der ersten Schaltstellung der Einlass-Auslass-Ventileinheit der Vorratsanschluss zur Aussteuerung eines Federspeicherbremsdrucks mit dem Federspeicheranschluss verbunden ist, und in der zweiten Schaltstellung der Einlass-Auslass-Ventileinheit der Federspeicheranschluss mit einer Entlüftung der Einlass-Auslass-Ventileinheit verbunden ist, und mit einer pneumatisch gesteuerten Bypasseinheit zum Aufrechterhalten eines Belüftungs- bzw. Entlüftungszustands von an den Federspeicheranschluss angeschlossenen Federspeicherbremszylindern in einem stromlosen Zustand der elektropneumatischen Einlass-Auslass-Ventileinheit.

Zunächst ist dadurch, dass in der ersten Schaltstellung der Einlass-Auslass-Ventileinheit der Vorratsanschluss zur Aussteuerung eines Federspeicherbremsdrucks mit dem Federspeicheranschluss verbunden ist, ein Federspeicherbremsdruck direkt von dem Vorratsanschluss an den Federspeicheranschluss durchsteuerbar. Hierdurch ist es möglich kein Relais-Ventil zu verwenden. Bei einem Relais-Ventil wird ausgehend vom Vorratsanschluss zunächst ein Steuerdruck an dem Relais-Ventil ausgesteuert, wobei das Relais-Ventil diesen Steuerdruck volumenverstärkt über einen Arbeitsanschluss aussteuert. Erst der volumenverstärkte (indirekte) Volumenstrom wird dann an dem Federspeicheranschluss bereitgestellt. In Abkehr hierzu sieht die Erfindung vor, dass der Federspeicherbremsdruck direkt von dem Vorratsanschluss an den Federspeicheranschluss durchgesteuert wird. Dies wurde dadurch realisiert, dass in der ersten Schaltstellung der Einlass-Auslass-Ventileinheit der Vorratsanschluss zur Aussteuerung des Federspeicherbremsdrucks mit dem Federspeicheranschluss verbunden ist.

Ferner nutzt die Erfindung eine pneumatisch gesteuerte Bypasseinheit. Die Bypasseinheit dient zum Aufrechterhalten des Belüftungs- bzw. Entlüftungszustands von an den Federspeicheranschluss angeschlossenen Federspeicherbremszylindern in einem stromlosen Zustand der elektropneumatischen Einlass-Auslass-Ventileinheit. Wird der Belüftungszustand aufrechterhalten, bleiben die Federspeicherbremszylinder geöffnet und das Fahrzeug, das in seinem Bremssystem das Feststellbremsmodul aufweist, kann in den Fahrbetrieb übergehen. In gleicher Weise gilt für die Aufrechterhaltung des Entlüftungszustands, dass die Federspeicherbremszylinder zugespannt sind, und dass Fahrzeug entsprechend gebremst ist. Beide Zustände werden mittels der pneumatisch gesteuerten Bypasseinheit aufrechterhalten, sodass die Einlass-Auslass-Ventileinheit sowohl im Fahrbetrieb als auch im Parkbetrieb stromlos ist. Die pneumatisch gesteuerte Bypasseinheit nutzt hierzu keine elektrische Energie, sondern lediglich einen pneumatischen Steuerdruck. Die pneumatisch gesteuerte Bypasseinheit ist vorzugsweise so gestaltet, dass der Belüftungszustand durch ein pneumatisch gesteuertes Einsperren des Drucks in den Federspeicherbremszylindern aufrechterhalten bleibt. Der ausgesteuerte Federspeicherbremsdruck muss nicht zwingend konstant gehalten werden, vielmehr reicht es aus, wenn der Belüftungs-, bzw. Entlüftungszustand aufrechterhalten bleibt. Beispielsweise ist insbesondere beim Belüftungszustand ein Nachsteuern des ausgesteuerten Federspeicherbremsdrucks wünschenswert, um eine etwaige Leckage auszugleichen, sodass auch wenn die Einlass-Auslass-Ventileinheit stromlos ist, die Federspeicherbremszylinder nicht aufgrund einer Leckage schleichend zuspannen.

Erfindungsgemäß ist in einer dritten Schaltstellung der Einlass-Auslass-Ventileinheit der Federspeicheranschluss mit der Bypasseinheit verbunden. Während also in der ersten Schaltstellung der Federspeicheranschluss mit dem Vorratsanschluss verbunden ist, sodass der Federspeicheranschluss belüftet wird und in der zweiten Schaltstellung der Federspeicheranschluss mit einer Entlüftung der Einlass-Auslass-Ventileinheit verbunden ist, sodass diese entlüftet wird, ist in der dritten Schaltstellung der Federspeicheranschluss mit der Bypasseinheit verbunden, die in der Folge stabil die Endlage hält. Hierdurch ist eine pneumatische Selbsthaltung erreicht. Die dritte Schaltstellung der Einlass-Auslass-Ventileinheit ist vorzugsweise die stromlose Schaltstellung. Das heißt, stromlos ist der Federspeicheranschluss mit der Bypasseinheit verbunden, die dann den ausgesteuerten Federspeicherbremsdruck stabil gegen Leckage hält.

Erfindungsgemäß ist die Bypasseinheit dazu eingerichtet, in der dritten Schaltstellung der Einlass-Auslass-Ventileinheit abhängig von dem Federspeicherbremsdruck am Federspeicheranschluss den Federspeicheranschluss zum Belüften mit dem Vorratsanschluss oder zum Entlüften mit einer Entlüftung zu verbinden. Hierzu weist die Bypasseinheit vorzugsweise einen Bypass-Schwellwert auf. Der Bypass-Schwellwert ist vorzugsweise so bemessen, dass er in etwa der Hälfte des maximalen Federspeicherbremsdrucks entspricht. Das heißt, wenn der Federspeicherbremsdruck oberhalb des Bypass-Schwellwert liegt, verbindet die Bypasseinheit den Federspeicheranschluss mit dem Vorratsanschluss, und wenn der Federspeicherbremsdruck unterhalb des Bypass-Schwellwert liegt, verbindet die Bypasseinheit den Federspeicheranschluss mit der Entlüftung. Hierdurch werden beide Zustände, sowohl der Belüftungszustand als auch der Entlüftungszustand stromlos aufrechterhalten. Der Federspeicherbremsdruck dient hier in diesem Fall als Steuerdruck für die Bypass-Einheit. Selbstverständlich ist es auch möglich, den Bypass-Schwellwert auf andere Weise einzustellen, sodass er beispielsweise einem Drittel des maximalen Federspeicherbremsdrucks, oder zwei Drittel es maximalen Federspeicherbremsdrucks entspricht. Die genaue Wahl des Bypass-Schwellwert kann von verschiedenen Faktoren abhängig gemacht werden, wie Leckage, Toleranzen, Art der Federspeicherbremszylinder, Nennweiten von Ventilen, Drosselung, etc.

Erfindungsgemäß erfolgen sowohl das Be- als auch das Entlüften des Federspeicheranschlusses über die Bypasseinheit gedrosselt. Wenigstens erfolgt das Entlüften des Federspeicheranschlusses über die Bypasseinheit gedrosselt. Hierdurch wird vermieden, dass bei einem Unterschreiten des oben genannten Bypass-Schwellwerts aufgrund eines Defekts die Bypasseinheit den Federspeicheranschluss rasch und vollständig entlüftet, und die Federspeicherbremszylinder somit plötzlich einfallen. Ebenso verhindert ein gedrosseltes Belüften, dass die Federspeicherbremszylinder plötzlich belüftet werden, wenn der Bypass-Schwellwert aufgrund eines Fehlers überschritten wird.

Es kann auch vorgesehen sein, dass zwei Bypass-Schwellwerte vorgesehen sind, sodass beispielsweise ein erster Bypass-Schwellwert für das Belüften des Federspeicheranschlusses bei etwa zwei Drittel des maximalen Federspeicherbremsdrucks liegt, und ein zweiter Schwellwert für das Entlüften des Federspeicheranschlusses bei etwa einem Drittel des maximalen Federspeicherbremsdrucks liegt. Hierdurch wird sichergestellt, dass tatsächlich ein Zustand aufrechterhalten bleibt und nicht aufgrund eines Fehlers in den anderen Zustand umgeschlagen wird.

Gemäß einer weiteren bevorzugten Ausführungsform ist vorgesehen, dass die Einlass-Auslass-Ventileinheit ein Umschaltventil aufweist, welches in einer ersten Schaltstellung das Durchsteuern des Federspeicherbremsdrucks direkt von dem Vorratsanschluss an den Federspeicheranschluss erlaubt, und in einer zweiten Schaltstellung den Federspeicheranschluss mit der Bypasseinheit verbindet, wobei das Umschaltventil stromlos in der zweiten Schaltstellung ist. Vorzugsweise verbindet das Umschaltventil in der ersten Schaltstellung den Federspeicheranschluss mit dem Vorratsanschluss, um den Federspeicherbremsdruck an dem Federspeicheranschluss auszusteuern. Das Umschaltventil ist vorzugsweise elektrisch geschaltet und als monostabiles Ventil ausgebildet. In der ersten Schaltstellung erlaubt das Umschaltventil vorzugsweise auch das Verbinden des Federspeicheranschlusses mit der Entlüftung.

Weiterhin ist bevorzugt, dass die Einlass-Auslass-Ventileinheit ein erstes 3/2-Wege-Ventil aufweist, welches in einer ersten Schaltstellung das Durchsteuern des Federspeicherbremsdrucks direkt von dem Vorratsanschluss an den Federspeicheranschluss erlaubt, und in einer zweiten Schaltstellung eine Verbindung des Federspeicheranschlusses mit einer Entlüftung erlaubt, wobei das erste 3/2-Wege-Ventil stromlos in der zweiten Schaltstellung ist. Das heißt, wenn das Umschaltventil in der ersten Schaltstellung ist, kann mittels des 3/2-Wege-Ventils zwischen Vorratsanschluss und Entlüftung geschaltet werden und somit der Federspeicheranschluss über das Umschaltventil mit dem 3/2-WegeVentil verbunden sein, welches dann wahlweise den Federspeicheranschluss mit der Entlüftung oder dem Vorratsanschluss verbindet. Auch das erste 3/2-Wege-Ventil ist vorzugsweise als monostabiles elektropneumatisches Ventil ausgebildet.

In einer bevorzugten Weiterbildung ist vorgesehen, dass das erste 3/2-WegeVentil einen mit dem Vorratsanschluss verbundenen ersten Anschluss, einen zweiten Anschluss und einen mit der Entlüftung verbundenen dritten Anschluss aufweist, wobei in der ersten Schaltstellung der erste und der zweite Anschluss verbunden sind, und in der zweiten Schaltstellung der dritte und der zweite Anschluss verbunden sind. Gleichzeitig ist vorzugsweise vorgesehen, dass das Umschaltventil einen ersten Umschaltventilanschluss, einen mit dem Federspeicheranschluss verbundenen zweiten Umschaltventilanschluss und einen mit der Bypasseinheit verbindbaren oder verbundenen dritten Umschaltventilanschluss aufweist, wobei in der ersten Schaltstellung der erste und zweite Umschaltventilanschluss verbunden sind, und in der zweiten Schaltstellung der dritte und der zweite Umschaltventilanschluss verbunden sind. Hierbei sind vorzugsweise der erste Umschaltventilanschluss mit dem zweiten Anschluss des ersten 3/2-Wege-Ventils verbunden. Hierdurch wird letztlich eine 4/3-Wege-Kombination erreicht, bei der der Federspeicheranschluss je nach Schaltung des Umschaltventils und des ersten 3/2-Wege-Ventils wahlweise mit dem Vorratsanschluss, der Entlüftung oder der Bypasseinheit verbunden ist. Die Ausbildung mit den zwei 3/2-Wege-Ventilen, nämlich dem ersten 3/2-Wege-Ventil und dem Umschaltventil, welches ebenfalls ein 3/2-Wege-Ventil ist, hat zum Vorteil, dass gleiche Teile verwendet werden können oder insgesamt ein einfacher Aufbau erreicht werden kann.

In dieser Weise stellt die Bypasseinheit vorzugsweise einen Bypass zum ersten 3/2-Wege-Ventil zwischen dem Vorratsanschluss und dem Umschaltventil her. Die Bypasseinheit selbst ist mit dem Vorratsanschluss verbunden. Vorzugsweise ist die Bypasseinheit mit der Entlüftung verbunden, oder weist eine eigene Entlüftung auf. Auf diese Weise stellt die Bypasseinheit nicht lediglich eine Druckfalle dar, sondern kann zusätzlich, wenn das Umschaltventil in der zweiten Schaltstellung ist, und den Federspeicheranschluss mit der Bypasseinheit verbunden hat, ein Belüften des Federspeicheranschlusses ermöglichen.

Die Bypasseinheit weist vorzugsweise eine erste Drossel auf. Hierdurch kann die gedrosselte Be- und Entlüftung des Federspeicheranschlusses über die Bypasseinheit erfolgen. Je nach Ausgestaltung kann die Bypasseinheit auch eine zweite Drossel aufweisen, wobei dies maßgeblich von der exakten Verschaltung abhängen kann.

Gemäß einer weiteren bevorzugten Ausführungsform weist die Bypasseinheit wenigstens ein pneumatisch gesteuertes Bypassventil auf. Das pneumatisch gesteuerte Bypassventil ist vorzugsweise als 2/2-Wege-Ventil ausgebildet und weist eine mit dem Vorratsanschluss verbundenen ersten Bypass-Ventilanschluss, einen mit der Einlass-Auslass-Ventileinheit verbundenen oder verbindbaren zweiten Bypass-Ventilanschluss und einen pneumatischen Bypass-Steuereingang auf. In Abhängigkeit von dem am Bypass-Ventilsteuereingang anliegenden Druck schaltet das Bypassventil folglich und verbindet die Einlass-Auslass-Ventileinheit mit dem Vorratsanschluss. Auf diese Weise lässt sich bei entsprechender Schaltung des Bypassventils ein Federspeicherbremsdruck von dem Vorratsanschluss über das Bypass-Ventil, die Einlass-Auslass-Ventileinheit an dem Federspeicheranschluss aussteuern. Hierdurch kann also der Federspeicherbremsdruck im belüfteten Zustand nachgesteuert werden.

Vorzugsweise weist die Bypasseinheit ein Auslassventil auf, welches zum Entlüften der Bypasseinheit dient. Soll der Entlüftungszustand des Federspeicherbremszylinders beibehalten werden, ist bevorzugt, dass der Federspeicheranschluss dauerhaft mit einer Entlüftung verbunden ist. Hierzu wird vorzugsweise das Auslassventil der Bypasseinheit eingesetzt. So wird verhindert, dass aufgrund einer Leckage in einem der Ventile der Federspeicheranschluss im geparkten Zustand des Fahrzeugs nach und nach belüftet wird, und sich so die Federspeicherbremszylinder lösen.

Das Auslassventil ist in dieser Ausführungsform vorzugsweise als 2/2-WegeVentil ausgebildet und weist einen mit einer ersten pneumatischen Bypassleitung verbundenen ersten Auslassventilanschluss und einen mit einer Entlüftung oder der Entlüftung verbundenen zweiten Auslassventilanschluss auf.

Ferner ist bevorzugt, dass das Auslassventil einen pneumatischen Auslassventil-Steuereingang aufweist und als Auslassventil-Steuerdruck der Federspeicherbremsdruck oder ein mit diesem äquivalenter Druck an dem Auslassventil-Steuereingang aussteuerbar ist. Das Auslassventil weist eine erste Schaltstellung auf, in der der erste Auslassventilanschluss mit dem zweiten Auslassventilanschluss verbunden ist und somit die Bypassleitung mit der Entlüftung verbunden ist. In einer zweiten Schaltstellung sind der erste und zweite Auslassventilanschluss getrennt und die erste pneumatische Bypassleitung ist nicht mit der Entlüftung verbunden. Das Auslassventil ist vorzugsweise drucklos in der ersten Schaltstellung, das heißt das Auslassventil ist dann in der ersten Schaltstellung, wenn der am Auslassventil-Steuereingang ausgesteuerte Auslassventil-Steuerdruck einen vorgegebenen Auslassventil-Schwellwert unterschreitet. Ein äquivalenter Druck kann insbesondere ein Druck der Einlass-Auslass-Ventileinheit sein, der über diese als Federspeicherbremsdruck an dem Federspeicheranschluss bereitgestellt wird.

In einer bevorzugten Weiterbildung ist vorgesehen, dass an dem pneumatischen Bypassventil-Steuereingang als Bypassventil-Steuerdruck der Federspeicherbremsdruck oder ein mit diesem äquivalenter Druck aussteuerbar ist. Das Bypassventil, wenn es als 2/2-Wege-Ventil ausgebildet ist, weist eine erste Schaltstellung auf, in der der erste Bypass-Ventilanschluss und der zweite Bypass-Ventilanschluss getrennt sind, und eine zweite Schaltstellung, in der der erste Bypass-Ventilanschluss und der zweite Bypass-Ventilanschluss verbunden sind. In der zweiten Schaltstellung kann folglich der Vorratsdruck an der Einlass-Auslass-Ventileinheit ausgesteuert werden, um so den Federspeicherbremsdruck nachzusteuern und den Federspeicherbremszylinder im Belüftungszustand zu halten. Das heißt, die zweite Schaltstellung des Bypassventils soll dann eingenommen werden, wenn die Federspeicherbremszylinder belüftet sind. Aus diesem Grund weist das Bypassventil den Bypass-Schwellwert auf, und bei Überschreiten des Bypass-Schwellwerts schaltet das Bypassventil in die zweite Schaltstellung, um den Federspeicherbremsdruck nachzuregeln. Entsprechend schaltet das Bypassventil bei Unterschreiten des Bypass-Schwellwerts in die erste Schaltstellung und trennt den ersten und zweiten Bypass-Ventilanschluss, um ein Entlüften der Bypasseinheit zu ermöglichen, ohne den Vorratsanschluss hierbei mit einer Entlüftung zu verbinden.

Sowohl bezogen auf das Auslassventil als auch bezogen auf das Bypassventil, ist es denkbar, dass der Federspeicherbremsdruck direkt abgegriffen und an den jeweiligen Auslassventil-Steuereingang und den Bypass-Steuereingang ausgesteuert wird, oder ein mit dem Federspeicherbremsdruck äquivalenter Druck ausgesteuert wird.

In einer bevorzugten Variante ist das pneumatisch gesteuerte Bypassventil als 3/2-Wege-Bypassventil ausgebildet und weist einen mit dem Vorratsanschluss verbundenen ersten Bypass-Ventilanschluss, einen mit der Einlass-Auslass-Ventileinheit verbundenen oder verbindbaren zweiten Bypass-Ventilanschluss, einen mit einer Entlüftung oder der Entlüftung verbundenen dritten Bypass-Ventilanschluss und einen pneumatischen Bypassventil-Steuereingang auf, wobei in einer zweiten Schaltstellung des 3/2-Wege-Bypassventils der erste und zweite Bypass-Ventilanschluss verbunden sind und in einer ersten Schaltstellung des 3/2-Wege-Bypassventils der dritte und zweite Bypass-Ventilanschluss verbunden sind. Vorzugsweise ist das 3/2-Wege-Bypassventil drucklos, d.h. wenn der Bypassventil-Steuerdruck den Bypass-Schwellwert unterschreitet, in der ersten Schaltstellung.

Wiederum ist bevorzugt, dass auch bei dem 3/2-Wege-Bypassventil an dem pneumatischen Bypassventil-Steuereingang als Bypassventil-Steuerdruck der Federspeicherbremsdruck oder ein mit diesem äquivalenter Druck aussteuerbar ist. Infolgedessen ist das 3/2-Wege-Bypassventil vorzugsweise in der ersten Schaltstellung, wenn der Bypassventil-Steuerdruck den Bypass-Schwellwert unterschreitet, und in der zweiten Schaltstellung, wenn der Bypassventil-Steuerdruck den Bypass-Schwellwert überschreitet.

Gemäß einer weiteren bevorzugten Ausführungsform weist das elektropneumatische Feststellbremsmodul einen Anhängersteueranschluss zum Anschließen eines Anhängersteuerventils auf, wobei an dem Anhängersteueranschluss der Federspeicherbremsdruck aussteuerbar ist. Wird das elektropneumatische Feststellbremsmodul in einem Nutzfahrzeug, welches als Motorwagen-Anhängerkombination ausgebildet ist, eingesetzt, ist bevorzugt, dass der Federspeicherdruck als Steuerdruck an ein Anhängersteuerventil übergeben wird. So ist es möglich, dass in einem geparkten Zustand der Motorwagen-Anhängerkombination die Betriebsbremsen des Anhängerwagens in Übereinstimmung mit den Federspeicherbremszylindern eingelegt werden. In bestimmten Situationen werden die Federspeicherbremszylinder auch als Hilfsbremsen oder Zusatzbremsen eingesetzt, um den Motorwagen abzubremsen. Auch in diesem Fall werden die Betriebsbremsen des Anhängerwagens dann in Übereinstimmung mit den Federspeicherbremszylindern aktiviert.

Weiterhin ist bevorzugt, dass dem Anhängersteueranschluss ein Anhängerventil vorgeschaltet ist, zum Durchführen einer Anhängerkontrollstellungsfunktion. In der Anhängerkontrollstellung wird in der europäischen Anhängersteuerung überprüft, ob die Motorwagen-Anhängerkombination auch ohne eingelegte Betriebsbremsen des Anhängerwagens nur aufgrund der Federspeicherbremszylinder des Motorwagens sicher steht. Um diesen Zustand zu erreichen ist es folglich erforderlich, einen Druck an dem Anhängersteueranschluss auszusteuern, wenn der Federspeicheranschluss entlüftet ist, um die Betriebsbremsen des Anhängerwagens zu lösen. Das an den Anhängersteueranschluss angeschlossene Anhängersteuerventil invertiert den ausgesteuerten Druck und lässt so die Betriebsbremsen des Anhängerwagens drucklos, das heißt in einem offenen Zustand. Die Anhängerkontrollstellungsfunktion wird nur temporär ausgeführt und in der Regel von einer Fahrzeugkabine aus angesteuert. Der Fahrzeugführer betätigt die Anhängerkontrollstellung, um das sichere Stehen der Motorwagen-Anhängerkombination zu überprüfen. Wenn festgestellt wird, dass die Motorwagen-Anhängerkombination sicher steht, wird die Anhängerkontrollstellung beendet und entsprechend das Anhängerventil so geschaltet, dass wiederum der Federspeicherbremsdruck an dem Anhängersteueranschluss ausgesteuert wird.

In einer bevorzugten Variante ist das Anhängerventil als 3/2-Wege-Anhängerventil ausgebildet, und weist einen mit dem Vorratsanschluss verbundenen ersten Anhängerventilanschluss, einen mit dem Anhängersteueranschluss verbundenen zweiten Anhängerventilanschluss und einen mit dem Federspeicheranschluss verbundenen dritten Anhängerventilanschluss auf. Vorzugsweise sind in einer ersten Schaltstellung des Anhängerventils der zweite und dritte Anhängerventilanschluss, und in einer zweiten Schaltstellung des Anhängerventils der erste und zweite Anhängerventilanschluss verbunden. Das Anhängerventil kann sowohl als elektropneumatisches monostabiles Ventil ausgebildet sein, oder als pneumatisch gesteuertes monostabiles Ventil ausgebildet sein. Vorzugsweise ist das Anhängerventil stromlos oder drucklos in der ersten Schaltstellung.

In einer Variante ist das Anhängerventil in der Bypasseinheit verschaltet. Das heißt, das Anhängerventil ist Teil der Bypasseinheit und wird auch zur Aussteuerung des Federspeicherbremsdrucks in die Bypasseinheit verwendet, wenn die Bypasseinheit den Belüftungszustand bzw. Entlüftungszustand der an dem Federspeicheranschluss angeschlossenen Federspeicherbremszylinder aufrechterhalten soll.

Bevorzugt ist das Anhängerventil in diesem Fall zwischen das pneumatisch gesteuert Bypass-Ventil und die Einlass-Auslass-Ventileinheit geschaltet. Vorzugsweise ist das Anhängerventil zwischen das pneumatisch gesteuerte Bypass-Ventil und das Umschaltventil geschaltet. Auf diese Weise kann eine besonders kompakte Schaltung erreicht werden, und der Federspeicherbremsdruck lässt sich auch elektronisch aussperren. Ferner ist auf diese Weise eine stabilere Regelung erreicht, wenn die Federspeicherbremszylinder zum Zusatzbremsen oder Hilfsbremsen gestuft eingelegt werden sollen. Für diesen Fall ist es möglich, die Bypasseinheit mittels des Anhängerventils abzusperren, sodass keine zusätzliche Be- oder Entlüftung des Federspeicheranschlusses über die Bypasseinheit erfolgt, wenn die Federspeicherbremszylinder gestuft eingelegt werden.

In einer bevorzugten Ausführungsform ist das Anhängerventil als 2/2-Wege-Anhängerventil ausgebildet und weist einen ersten Anhängerventilanschluss und einen zweiten Anhängerventilanschluss auf. Vorzugsweise ist der erste Anhängerventilanschluss mit der ersten Bypassleitung und der zweite Anhängerventilanschluss mit dem dritten Umschaltventilanschluss und/oder dem Anhängersteueranschluss verbunden.

Weiterhin ist bevorzugt, dass dem Vorratsanschluss ein Rückschlagventil vor- oder nachgeschaltet ist. Vorzugsweise weist das elektropneumatische Feststellbremsmodul kein Rückschlagventil auf. Vorzugsweise ist an dem Vorratsanschluss kein Rückschlagventil angeordnet. Vorzugsweise ist da elektropneumatische Feststellbremsmodul dazu ausgebildet, ein Entlüften des Federspeicheranschlusses durch ein Entlüften des Vorratsanschlusses, insbesondere durch ein sogenanntes "Herunterpumpen" zu erlauben. In einem solchen Fall wird der Druckluftvorrat, der an den Vorratsanschluss angeschlossen ist, entlüftet und kein Vorratsdruck mehr bereitgestellt, sodass der Federspeicheranschluss unabhängig von der Schaltstellung der einzelnen Ventile entlüftet wird. Dies kann der Sicherheit dienen, wenn ein Fehler in den Ventilen auftreten sollte.

In einer weiteren bevorzugten Ausführungsform ist vorgesehen, dass das elektropneumatische Feststellbremsmodul eine elektronische Steuereinheit mit einem elektrischen Anschluss zum Empfang von Feststellbremssignalen und zum Bereitstellen entsprechender Schaltsignale wenigstens an die Einlass-Auslass-Ventileinheit aufweist. Der elektrische Anschluss zum Empfang von Feststellbremssignalen kann beispielsweise mit einem Fahrzeugbus verbunden sein, oder direkt über eine Verkabelung mit einem Parkbrems-Schalter, bzw. Handbrems-Schalter in der Fahrerkabine des Fahrzeugs.

Ferner ist bevorzugt, dass das elektropneumatische Feststellbremsmodul einen Drucksensor aufweist, der dazu vorgesehen ist, den Federspeicherbremsdruck zu erfassen und ein entsprechendes Signal bereitzustellen. Vorzugsweise stellt der Drucksensor das Signal an der elektronischen Steuereinheit bereit. Die elektronische Steuereinheit kann das Signal an einen Fahrzeugbus oder dergleichen übergeben, oder selbstständig verarbeiten. Über das von dem Drucksensor erfasste Signal kann ermittelt werden, ob die Federspeicherbremszylinder zugespannt oder offen sind.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Figur 1 ein Blockschaltbild eines elektropneumatischen Feststellbremsmoduls gemäß einem ersten Ausführungsbeispiel;
Figur 2 ein Blockschaltbild eines elektropneumatischen Feststellbremsmoduls gemäß einem zweiten Ausführungsbeispiel;
Figur 3 ein Blockschaltbild eines elektropneumatischen Feststellbremsmoduls gemäß einem dritten Ausführungsbeispiel; und
Figur 4 ein Blockschaltbild eines elektropneumatischen Feststellbremsmoduls gemäß einem vierten Ausführungsbeispiel.

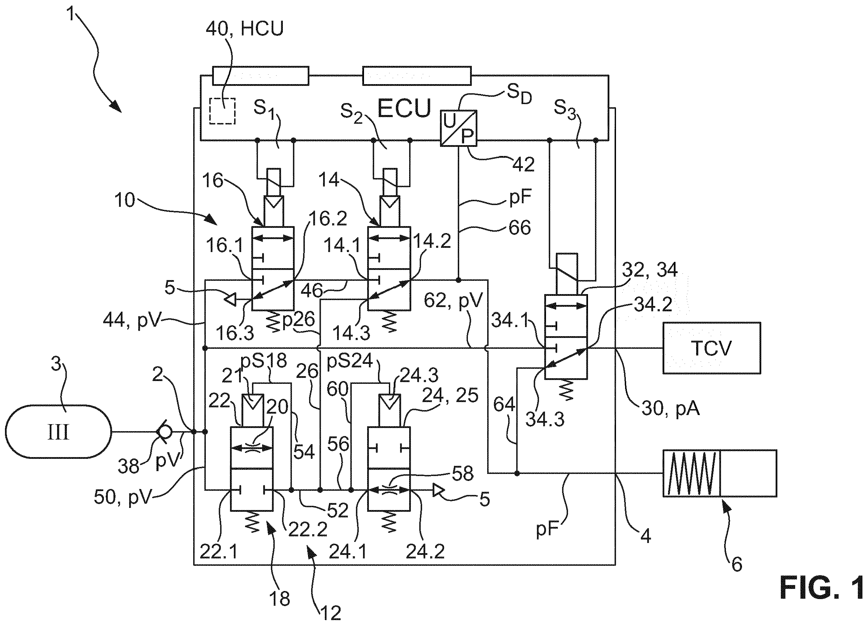

In einer ersten Ausführungsform weist ein elektropneumatisches Feststellbremsmodul 1 gemäß der Erfindung einen Vorratsanschluss 2 auf, an dem ein Druckluftvorrat 3 anschließbar ist. Weiterhin weist das elektropneumatische Feststellbremsmodul wenigstens einen Federspeicheranschluss 4 zum Anschließen wenigstens eines Federspeicherbremszylinders 6 auf. Es soll verstanden werden, dass anstelle eines einzigen (wie in Figur 1 gezeigten) Federspeicheranschlusses 4, auch zwei, vier oder mehr Federspeicheranschlüsse 4 vorgesehen sein können, oder an den einen Federspeicheranschluss 4 zwei, vier oder mehr Federspeicherbremszylinder 6 angeschlossen werden können. Federspeicherbremszylinder 6 sind allgemein durch eine Federkraft vorgespannt und weisen eine Kammer auf, die belüftet werden kann. Wird diese Kammer belüftet, lösen die Federspeicherbremszylinder 6 entgegen der Federkraft und das Fahrzeug kann in einen Fahrbetrieb versetzt werden. Im drucklosen Zustand spannen die Federspeicherbremszylinder 6 aufgrund der Federkraft zu und bremsen so das Fahrzeug. Federspeicherbremszylinder 6 werden in der Regel als Parkbremsen oder Feststellbremsen eingesetzt, oder auch als Hilfsbremsen oder Zusatzbremsen in besonderen Fahrsituationen.

Um den Federspeicheranschluss 4 zu be- oder entlüften, weist das elektropneumatische Feststellbremsmodul 1 gemäß diesem Ausführungsbeispiel (Figur 1) eine Einlass-Auslass-Ventileinheit 10 auf. Die Einlass-Auslass-Ventileinheit 10 ist elektropneumatisch ausgebildet und weist wenigstens eine erste und eine zweite Schaltstellung auf. In der ersten Schaltstellung (in Figur 1 nicht gezeigt) ist die Einlass-Auslass-Ventileinheit 10 so geschaltet, dass der Vorratsanschluss 2 zur Aussteuerung eines Federspeicherbremsdrucks pF mit dem Federspeicheranschluss 4 verbunden ist. Das heißt, der Federspeicherbremsdruck pF wird direkt von dem Vorratsanschluss 2 an den Federspeicheranschluss 4 durchgesteuert. Eine Volumenverstärkung, beispielsweise mittels eines Relais-Ventils oder dergleichen, findet nicht statt. Es wird auch nicht zuerst ein Steuerdruck erzeugt; der Druck wird direkt bei Schalten der Einlass-Auslass-Ventileinheit 10 als Volumendruck an dem Federspeicheranschluss 4 bereitgestellt. In der zweiten ebenfalls in Figur 1 nicht gezeigten Schaltstellung der Einlass-Auslass-Ventileinheit 10, ist der Federspeicheranschluss 4 entlüftbar, indem der Federspeicheranschluss 4 mit einer Entlüftung 5 der Einlass-Auslass-Ventileinheit 10 verbunden ist.

Insgesamt sind sämtliche Entlüftungen 5 im Folgenden mit Bezugszeichen 5 bezeichnet, wodurch verdeutlicht werden soll, dass das elektropneumatische Feststellbremsmodul 1 insgesamt eine einzige Entlüftung 5 aufweisen kann, oder Einzelelemente des elektropneumatischen Feststellbremsmoduls 1 weisen eine separate Entlüftung auf.

Neben den ersten und zweiten Schaltstellungen (beide in Figur 1 nicht gezeigt) weist die Einlass-Auslass-Ventileinheit 10 eine dritte Schaltstellung auf, die in Figur 1 gezeigt ist. In der dritten Schaltstellung ist der Federspeicheranschluss 4 mit einer pneumatisch gesteuerten Bypasseinheit 12 verbunden. Die Bypass-einheit 12 wirkt als Druckfalle und dient zum Aufrechterhalten eines Belüftungszustands bzw. Entlüftungszustands von an den Federspeicheranschluss 4 angeschlossenen Federspeicherbremszylindern 6. Die Einlass-Auslass-Ventileinheit 10 ist stromlos vorzugsweise in der dritten Schaltstellung. In dieser dritten stromlosen Schaltstellung hält die Bypasseinheit dann den Belüftungs- bzw. Entlüftungszustand von an dem Federspeicheranschluss 4 angeschlossenen Federspeicherbremszylindern 6 aufrecht.

Konkret weist die Einlass-Auslass-Ventileinheit 10 gemäß diesem Ausführungsbeispiel (Figur 1) ein Umschaltventil 14 und ein erstes 3/2-Wege-Ventil 16 auf. Das erste 3/2-Wege-Ventil 16 weist einen ersten Anschluss 16.1, einen zweiten Anschluss 16.2 und einen dritten Anschluss 16.3 auf. Der erste Anschluss 16.1 ist über eine erste pneumatische Leitung 44 mit dem Vorratsanschluss 2 verbunden. In der ersten pneumatischen Leitung 44 liegt der Vorratsdruck pV an. Der dritte Anschluss 16.3 ist mit einer Entlüftung 5 verbunden. Die Entlüftung 5 kann, wie oben bereits erwähnt, eine separate Entlüftung der Einlass-Auslass-Ventileinheit 10 sein, oder eine zentrale Entlüftung des elektropneumatischen Feststellbremsmoduls 1. Der zweite Anschluss ist über eine zweite pneumatische Leitung 46 mit dem Umschaltventil 14 verbunden. Genauer gesagt, ist die zweite pneumatische Leitung 46 mit einem ersten Umschaltventilanschluss 14.1 verbunden.

Das Umschaltventil 14 ist gemäß diesem Ausführungsbeispiel (Figur 1) ebenfalls als 3/2-Wege-Ventil ausgebildet und weist neben dem ersten Umschaltventilanschluss 14.1 einen zweiten Umschaltventilanschluss 14.2 und einen dritten Umschaltventilanschluss 14.3 auf. Sowohl das Umschaltventil 14 als auch das erste 3/2-Wege-Ventil 16 sind als elektromagnetische Ventile ausgebildet, insbesondere monostabile elektromagnetische Ventile.

Zum Schalten des Umschaltventils 14 und des ersten 3/2-Wege-Ventils 16 weist das elektropneumatische Feststellbremsmodul 1 eine elektronische Steuereinheit ECU auf, die entsprechende erste und zweite Schaltsignale S1, S2 an dem ersten 3/2-Wege-Ventil 16, bzw. dem Umschaltventil 14 bereitstellt. Mittels des ersten Schaltsignals S1 wird das erste 3/2-Wege-Ventil 16 von der ersten in Figur 1 gezeigten Schaltstellung in eine zweite in Figur 1 nicht gezeigte Schaltstellung verbracht. In der ersten in Figur 1 gezeigten Schaltstellung ist das erste 3/2-Wege-Ventil 16 so geschaltet, dass der zweite Anschluss 16.2 des ersten 3/2-Wege-Ventils 16 mit dem dritten Anschluss 16.3 des ersten 3/2-WegeVentils 16 verbunden ist. Die zweite pneumatische Leitung 46 ist folglich mit der Entlüftung 5 verbunden. In der in Figur 1 gezeigten Schaltstellung des ersten3/2-Wege-Ventils 16 ist in der zweiten pneumatischen Leitung 46 folglich der Umgebungsdruck ausgesteuert.

In der zweiten in der in Figur 1 nicht gezeigten Schaltstellung des ersten 3/2-Wege-Ventils 16, ist der erste Anschluss 16.1 des ersten 3/2-Wege-Ventils 16 mit dem zweiten Anschluss 16.2 des ersten 3/2-Wege-Ventils 16 verbunden. In der zweiten Schaltstellung des ersten 3/2-Wege-Ventils 16 ist daher der Vorratsdruck pV in der zweiten pneumatischen Leitung 46 ausgesteuert. Das erste 3/2-Wege-Ventil 16 ist stromlos in der ersten Schaltstellung.

In entsprechender Weise weist das Umschaltventil 14 eine erste in Figur 1 gezeigte Schaltstellung und eine zweite in Figur 1 nicht gezeigte Schaltstellung auf. Mittels des zweiten Schaltsignals S2 ist das Umschaltventil 14 von der ersten in Figur 1 gezeigten Schaltstellung in die zweite in Figur 1 nicht gezeigte Schaltstellung verbringbar. Das Umschaltventil 14 ist federbelastet in die erste Schaltstellung vorgespannt, sodass es stromlos in der ersten in Figur 1 gezeigten Schaltstellung ist.

In der ersten in Figur 1 gezeigten Schaltstellung ist der zweite Umschaltventilanschluss 14.2 mit dem dritten Umschaltventilanschluss 14.3 verbunden. In der zweiten in Figur 1 nicht gezeigten Schaltstellung ist der erste Umschaltventilanschluss 14.1 mit dem zweiten Umschaltventilanschluss 14.2 verbunden. Das heißt, in der zweiten in Figur 1 nicht gezeigten Schaltstellung, ist die zweite pneumatische Leitung 46 mit einer Federspeicherbremsdruckleitung 48 verbunden, die den zweiten Umschaltventilanschluss 14.2 mit dem Federspeicheranschluss 4 verbindet.

Ein Zustand, in dem sowohl das erste 3/2-Wege-Ventil 16 als auch das Umschaltventil 14 in ihren zweiten in Figur 1 nicht gezeigten Schaltstellungen sind, wird als erste Schaltstellung der Einlass-Auslass-Ventileinheit 10 bezeichnet, die in diesem Zustand den Vorratsanschluss 2 über das erste 3/2-Wege-Ventil 16 und das Umschaltventil 14 mit dem Federspeicheranschluss 4 verbindet und den Vorratsdruck pV als Federspeicherbremsdruck pF an dem Federspeicheranschluss 4 aussteuert. Als zweite Schaltstellung der Einlass-Auslass-Ventileinheit 10 wird ein Zustand bezeichnet, in dem das erste 3/2-Wege-Ventil 16 in der ersten in Figur 1 gezeigten Schaltstellung ist und das Umschaltventil 14 in der zweiten in Figur 1 nicht gezeigten Schaltstellung ist. In diesem Zustand ist die Federspeicherbremsdruckleitung 48 mit der Entlüftung 5 verbunden und der Federspeicheranschluss 4 kann entlüftet werden. In der dritten Schaltstellung der Einlass-Auslass-Ventileinheit 10 ist das Umschaltventil 14 in der ersten in Figur 1 gezeigten Schaltstellung. In diesem Zustand ist die Schaltstellung des ersten 3/2-Wege-Ventils 16 unerheblich, aber bevorzugt in der stromlosen Stellung.

In der ersten Schaltstellung des Umschaltventils 14, also in der dritten Schaltstellung der Einlass-Auslass-Ventileinheit 10, ist der Federspeicheranschluss 4 über die Federspeicherbremsdruckleitung 48 mit der Bypasseinheit 12 verbunden. Genauer gesagt ist die Federspeicherbremsdruckleitung 48 mit einer ersten pneumatischen Bypassleitung 26 verbunden. Wie bereits erwähnt, dient die Bypasseinheit 12 als Druckfalle, die ein Nachregeln des Drucks erlaubt, um einen Belüftungs- oder Entlüftungszustand, der an den Federspeicheranschluss 4 angeschlossenen Federspeicherbremszylinder 6 aufrecht zu halten.

Um beispielsweise den Federspeicheranschluss 4 zu belüften und die Federspeicherbremszylinder 6 zu lösen, wird gemäß diesem Ausführungsbeispiel (Figur 1) die Einlass-Auslass-Ventileinheit 10 in die erste Schaltstellung, also das Umschaltventil 14 und das erste 3/2-Wege-Ventil 16 in die in Figur 1 nicht gezeigte zweite Schaltstellung gebracht. Von dem Vorratsanschluss 2 aus kann nun ein Volumendruck über die erste pneumatische Leitung 44, das erste 3/2-Wege-Ventil 16, die zweite pneumatische Leitung 46, das Umschaltventil 14, und die Federspeicherbremsdruckleitung 48 an den Federspeicheranschluss 4 bereitgestellt werden. Der Federspeicherdruck pF ist ausgesteuert und die Federspeicherbremszylinder 6 werden belüftet und so gelöst. Nun kann die Einlass-Auslass-Ventileinheit 10 stromlos geschaltet werden, und das Umschaltventil 14 fällt in den ersten Schaltzustand (in Figur 1 gezeigt) zurück. Die Federspeicherbremsdruckleitung 48 wird mit der ersten pneumatischen Bypassleitung 26 verbunden, die dann den belüfteten Zustand der Federspeicherbremszylinder 6 aufrechterhält.

Die Funktionsweise der Bypasseinheit 12 gemäß dem ersten Ausführungsbeispiel (Figur 1) wird nun im Folgenden genauer beschrieben.

In diesem Ausführungsbeispiel (Figur 1) weist die Bypasseinheit 12 ein pneumatisch gesteuertes Bypassventil 18 auf. Das pneumatisch gesteuerte Bypass-ventil 18 ist in diesem ersten Ausführungsbeispiel (Figur 1) als 2/2-Wege-Bypassventil 22 ausgebildet. Das 2/2-Wege-Bypassventil weist einen ersten Bypass-Ventilanschluss 22.1 und einen zweiten Bypass-Ventilanschluss 22.2 auf. Ferner weist das Bypassventil 18, hier als 2/2-Wege-Bypassventil 22 ausgebildet, einen pneumatischen Bypassventil-Steuereingang 21 auf. Der erste Bypass-Ventilanschluss 22.1 ist mit einer dritten pneumatischen Leitung 50 verbunden, die ihrerseits mit dem Vorratsanschluss 2 verbunden ist. An dem ersten Bypass-Ventilanschluss 22.1 liegt daher der Vorratsdruck pV an. Der zweite Bypass-Ventilanschluss 22.2 ist mit der ersten pneumatischen Bypassleitung 26 verbunden, genauer gesagt mit einer ersten Bypass-Abzweigleitung 52, die von der ersten pneumatischen Bypassleitung 26 abzweigt. In der dritten Schaltstellung der Einlass-Auslass-Ventileinheit 10, also der ersten Schaltstellung des Umschaltventils 14 in diesem Ausführungsbeispiel (Figur 1), liegt daher an dem zweiten Bypass-Ventilanschluss 22 der Federspeicherbremsdruck pF als äquivalenter Druck p26 an. Der äquivalente Druck p26 kann direkt dem Federspeicherbremsdruck pF entsprechen, oder von diesem abweichen, insbesondere in Abhängigkeit von der Gestaltung des Umschaltventils 14.

Die Bypasseinheit 12 weist ferner eine Bypassventil-Steuerleitung 54 auf, die dazu vorgesehen ist, den äquivalenten Druck p26 als Bypassventil-Steuerdruck pS18 an dem Bypassventil-Steuereingang 21 auszusteuern. Dazu verbindet die Bypassventil-Steuerleitung 54 die erste pneumatische Bypassleitung 26 bzw. die erste Bypass-Abzweigleitung 52 mit dem pneumatischen Bypassventil-Steuereingang 21.

Das 2/2-Wege-Bypassventil 22 weist eine erste in Figur 1 gezeigte Schaltstellung auf, in der der erste Bypass-Ventilanschluss 22.1 und der zweite Bypass-Ventilanschluss 22.2 getrennt sind, und eine zweite Schaltstellung, in der der erste Bypass-Ventilanschluss 22.1 und der zweite Bypass-Ventilanschluss 22.2 verbunden sind. Das pneumatisch gesteuerte Bypassventil 18, hier das 2/2-Wege-Bypassventil 22, ist monostabil in die erste in Figur 1 gezeigte Schaltstellung vorgespannt. Sobald der Bypassventil-Steuerdruck pS18 einen Bypass-ventil-Schwellwert überschreitet, schaltet das pneumatisch gesteuerte Bypass-ventil 18 in die zweite in Figur 1 nicht gezeigte Schaltstellung, und der erste Bypass-Ventilanschluss 22.1 wird mit dem zweiten Bypass-Ventilanschluss 22.2 verbunden. Infolge dieser Schaltung wird der Vorratsdruck pV durch das pneumatisch gesteuerte Bypassventil 18, hier das 2/2-Wege-Bypassventil 22, durchgesteuert und in die erste pneumatische Bypassleitung 26 ausgesteuert. Um hier keinen schlagartigen Druckaufbau zu erreichen, weist die Bypasseinheit 12 eine erste Drossel 20 auf, die in diesem Ausführungsbeispiel (Figur 1) in dem 2/2-Wege-Bypassventil 22 ausgebildet ist und eine gedrosselte Aussteuerung des Vorratsdrucks pV in die erste pneumatische Bypassleitung 26 ermöglicht. Der Vorratsdruck pV wird also in der zweiten Schaltstellung des 2/2-Wege-Bypassventils 22 gedrosselt in die erste pneumatische Bypassleitung 26 ausgesteuert und von dort über das Umschaltventil 14, das in der ersten Schaltstellung ist, über die Federspeicherbremsdruckleitung 48 an dem Federspeicheranschluss 4 bereitgestellt. Das heißt, sobald der Federspeicherbremsdruck pF eine Höhe erreicht, die in einen Bypassventil-Steuerdruck pS18 resultiert, der den Bypass-Schwellwert überschreitet, wird gedrosselt Vorratsdruck pV zusätzlich an dem Federspeicheranschluss 4 bereitgestellt, sodass der belüftete Zustand des Federspeicherbremszylinders 6 aufrechterhalten bleibt.

Um auch den Entlüftungszustand aufrechtzuerhalten, weist die Bypasseinheit 12 ein Auslassventil 24 zum Entlüften der Bypasseinheit 12 auf. Das Auslassventil 24 ist in diesem Ausführungsbeispiel (Figur 1) als 2/2-Wege-Auslassventil 25 ausgebildet und weist einen ersten Auslassventilanschluss 24.1 und einen zweiten Auslassventilanschluss 24.2 auf. Darüber hinaus weist das Auslassventil 24 einen Auslassventil-Steuereingang 24.3 auf, an dem ein Auslassventil-Steuerdruck pS24 aussteuerbar ist. Der Auslassventil-Steuereingang 24.3 ist mit einer Auslassventil-Steuerleitung 60 verbunden, die dazu vorgesehen ist, dem äquivaltenten Druck P26 an dem Auslassventil-Steuereingang 24.3 auszusteuern. Dazu zweigt die Auslassventil-Steuerleitung 60 von der ersten pneumatischen Bypassleitung 26 bzw. der zweiten Bypass-Abzweigleitung ab.

Das 2/2-Wege-Auslassventil 25 ist grundsätzlich in ähnlicher Weise wie das 2/2-Wege-Bypassventil 22 ausgebildet, weist aber eine umgekehrte Schaltstellung auf. In der ersten in Figur 1 gezeigten Schaltstellung des 2/2-Wege-Auslassventils 25 ist der erste Auslassventilanschluss 24.1 mit dem zweiten Auslassventilanschluss 24.2 verbunden; in der zweiten in Figur 1 nicht gezeigten Schaltstellung des 2/2-Wege-Auslassventils 25 sind der erste und zweite Auslassventilanschluss 24.1, 24.2 getrennt. Der zweite Auslassventilanschluss 24.2 ist mit einer Entlüftung 5, oder der Zentralentlüftung 5 des elektropneumatischen Feststellbremsmoduls 1 verbunden. Der erste Auslassventilanschluss 24.1 ist mit der ersten pneumatischen Bypassleitung 26 verbunden, genauer gesagt mit einer zweiten Bypass-Abzweigleitung 56, die ebenso wie die erste Bypass-Abzweigleitung 52 von der ersten pneumatischen Bypassleitung 26 abzweigt. Insofern lässt sich die erste pneumatische Bypassleitung 26 entlüften, wenn das 2/2-Wege-Auslassventil 25 in der in Figur 1 gezeigten ersten Schaltstellung ist. Um auch die Entlüftung nicht schlagartig zu gestalten, weist auch das 2/2-Wege-Auslassventil 25 wie schon mit Bezug auf das 2/2-Wege-Bypassventil 22 beschrieben, eine zweite Drossel 58 auf, die in dem 2/2-Wege-Auslassventil 25 ausgebildet ist. Sie könnte aber ebenso hinter oder vor den ersten und zweiten Auslassventilanschlüssen 24.1, 24.2 angeordnet sein.

Sobald der Auslassventil-Steuerdruck pS24 einen Auslassventil-Schwellwert überschreitet, schaltet das 2/2-Wege-Auslassventil 25 in die zweite in Figur 1 nicht gezeigte Schaltstellung. In dieser zweiten, nicht gezeigten Schaltstellung, ist die Entlüftung 5 ausgesperrt und die erste pneumatische Bypassleitung 26 kann nicht entlüftet werden. Der Auslassventil-Schwellwert entspricht vorzugsweise in etwa dem Bypassventil-Schwellwert, oder ist etwas niedriger als dieser. Das heißt, wenn der Federspeicherbremszylinder 6 belüftet ist, liegt der Federspeicherbremsdruck pF sowohl oberhalb des Bypassventil-Schwellwerts als auch oberhalb des Auslassventil-Schwellwerts, sodass das 2/2-Wege-Bypassventil 22 und das 2/2-Wege-Auslassventil 25 jeweils in der zweiten in Figur 1 nicht gezeigten Schaltstellung sind. Der Federspeicheranschluss 4 wird in dieser Schaltstellung, wie bereits beschrieben, zusätzlich mit Vorratsdruck pV gedrosselt versorgt, um den Belüftungszustand des Federspeicherbremszylinders 6 aufrechtzuerhalten. Ist allerdings der Federspeicherbremsdruck pF unterhalb des Bypassventil-Schwellwerts und des Auslassventil-Schwellwerts, ist das 2/2-Wege-Bypassventil und das 2/2-Wege-Auslassventil in der jeweils ersten in Figur 1 gezeigten Schaltstellung und die erste pneumatische Bypassleitung 26, die Federspeicherbremsdruckleitung 48 und somit der Federspeicheranschluss 2 und die daran angeschlossenen Federspeicherbremszylinder 6 sind gedrosselt mit der Entlüftung 5 verbunden und werden zusätzlich entlüftet. Ein nachträgliches versehentliches Lösen der Federspeicherbremszylinder 6 beispielsweise aufgrund eines Leckagestroms ist nicht möglich. Der Entlüftungszustand wird aufrechterhalten.

Das elektropneumatische Feststellbremsmodul 1 gemäß dem vorliegenden Ausführungsbeispiel weist ferner einen Anhängersteueranschluss 30 auf. Bei Motorwagen-Anhängerkombinationen ist es bevorzugt, dass die Betriebsbremsen des Anhängerwagens in Übereinstimmung mit den Federspeicherbremszylindern 6 des Motorwagens eingebremst werden. hierbei wird grundsätzlich zwischen der sogenannten europäische Anhängersteuerung und der sogenannten skandinavischen Anhängersteuerung unterschieden. Während bei der europäischen Anhängersteuerung die Betriebsbremsen des Anhängerwagens im geparkten Zustand des Fahrzeugs permanent eingebremst sein sollen, wird bei der skandinavischen Anhängersteuerung gefordert, dass im geparkten Zustand der Motorwagen-Anhängerkombination die Betriebsbremsen des Anhängerwagens gelöst werden, um ein Einfrieren zu verhindern. Dennoch wird auch bei einer skandinavischen Anhängersteuerung gefordert, dass für andere Fälle, in denen die Federspeicherbremszylinder 6 des Motorwagens aktiviert werden, das heißt zugespannt werden, die Betriebsbremsen des Anhängerwagens ebenfalls eingebremst werden.

Zu diesem Zweck weist das elektropneumatische Feststellbremsmodul 1 gemäß der vorliegenden Ausführungsform ein Anhängerventil 32 auf, das dem Anhängersteueranschluss 30 vorgeschaltet ist. An dem Anhängersteueranschluss 30 wird ein Anhängersteuerdruck pA ausgesteuert, der dem Federspeicherbremsdruck pF entspricht, oder ein äquivalenter Druck p26 hierzu ist. An dem Anhängersteueranschluss 30 ist ein Anhängersteuerventil TCV anschließbar, welches den bereitgestellten Anhängersteuerdruck pA invertiert und dann invers an die Betriebsbremsen eines Anhängerwagens (nicht gezeigt) aussteuert. Ein solcher Aufbau ist generell bekannt.

Das Anhängerventil 32 dient zur Umsetzung der Anhängerkontrollstellungsfunktion. Zu diesem Zweck ist das Anhängerventil 32 in dieser Ausführungsform (Figur 1) als zweites 3/2-Wege-Ventil 34 ausgebildet und weist einen ersten Anhängerventilanschluss 34.1, einen zweiten Anhängerventilanschluss 34.2 und einen dritten Anhängerventilanschluss 34.3 auf. In einer ersten in Figur 1 gezeigten Schaltstellung ist der zweite Anhängerventilanschluss 34.2 mit dem dritten Anhängerventilanschluss 34.3 verbunden. In einer zweiten, in Figur 1 nicht gezeigten Schaltstellung, ist der erste Anhängerventilanschluss 34.1 mit dem zweiten Anhängerventilanschluss 34.2 verbunden. Der erste Anhängerventilanschluss ist mit einer vierten pneumatischen Leitung 62 verbunden, die von der ersten pneumatischen Leitung 44 abzweigt und in der der Vorratsdruck pV anliegt. Das heißt, an dem ersten Anhängerventilanschluss 34.1 liegt der Vorratsdruck pV an. Der zweite Anhängerventilanschluss 34.2 ist mit dem Anhängersteueranschluss 30 verbunden. Der dritte Anhängerventilanschluss 34.3 ist über eine Federspeicherabzweigleitung 64 mit der Federspeicherbremsdruckleitung 48 verbunden, in der der Federspeicherbremsdruck pV ausgesteuert ist. Das heißt, an dem dritten Anhängerventilanschluss 34.3 liegt der Federspeicherbremsdruck pF an.

Mittels des Anhängerventils 32 kann nun an dem Anhängersteueranschluss 30 entweder der Vorratsdruck pV oder der Federspeicherbremsdruck pF ausgesteuert werden. Für den Fall, dass der Federspeicherbremsdruck pF als Anhängersteuerdruck pA ausgesteuert wird, werden die Betriebsbremsen des Anhängerwagens in Übereinstimmung mit den Federspeicherbremszylindern 6 gesteuert. Da heißt, wenn die Federspeicherbremszylinder 6 zuspannen, werden auch die Betriebsbremsen des Anhängerwagens zugespannt. Um dies zu verhindern, kann mittels eines dritten Stellsignals S3 von der elektronischen Steuereinheit ECU das Anhängerventil 32 in die zweite Schaltstellung gebracht werden, sodass an dem Anhängersteueranschluss 30 als Anhängersteuerdruck pA der Vorratsdruck pV ausgesteuert wird. In diesem Fall bleiben die Betriebsbremsen des Anhängerwagens gelöst.

Das in Figur 1 gezeigte Ausführungsbeispiel nutzt ein Anhängerventil 32, welches stromlos in der ersten in Figur 1 gezeigten Schaltstellung ist, und somit stromlos den Federspeicherbremsdruck pF als Anhängersteuerdruck pA aussteuert. Das in Figur 1 gezeigte Ausführungsbeispiel setzt somit die europäisehe Anhängersteuerung um, in der in einem geparkten Zustand des Fahrzeugs (stromloser Zustand) der Anhängerwagen in Übereinstimmung mit den Federspeicherbremszylindern 6 des Motorwagens eingebremst sind. Für die skandinavische Anhängersteuerung muss das Umgekehrte der Fall sein. In diesem Fall sind die Schaltstellungen des Anhängerventils 32 umgekehrt, das heißt, das Anhängerventil 32 ist stromlos in der zweiten, in Figur 1 nicht gezeigten, Schaltstellung.

Gemäß dem in Figur 1 gezeigten Ausführungsbeispiel weist die elektronische Steuereinheit ECU weiterhin einen elektrischen Anschluss 40 auf, über den Parkbremssignale HCU von einem Parkbremsschalter in der Fahrzeugkabine bereitgestellt werden können. Abhängig von den empfangenen Parkbremssignalen HCU ermittelt die elektronische Steuereinheit ECU entsprechende Schaltsignale S1, S2, S3 und stellt diese bedarfsweise bereit.

Weiterhin weist das elektropneumatische Feststellbremsmodul 1 einen Drucksensor 32 auf, der dazu vorgesehen ist, den Federspeicherbremsdruck pF zu erfassen. Zu diesem Zweck weist der Sensor 32 eine Messleitung 66 auf, die von der Federspeicherbremsdruckleitung 48 abzweigt. Der Drucksensor 42 stellt ein Drucksignal SD an der elektronischen Steuereinheit ECU bereit, sodass basierend auf dem empfangenen Drucksignal SD mittels der elektronischen Steuereinheit ECU bestimmt werden kann, ob die Federspeicherbremszylinder 6 zugespannt oder gelöst sind.

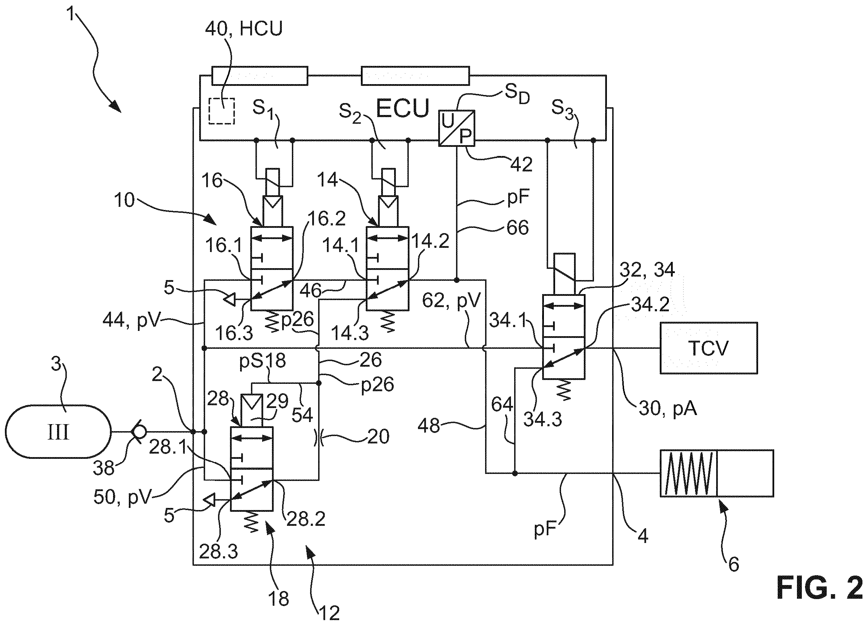

Die weiteren Ausführungsbeispiele 2, 3 und 4 werden nun mit Bezug auf Figuren 2, 3 und 4 beschrieben, wobei gleiche und ähnliche Elemente mit gleichen Bezugszeichen versehen sind und insofern vollumfänglich auf die obige Beschreibung zum ersten Ausführungsbeispiel (Figur 1) Bezug genommen wird. Im Folgenden werden insbesondere die Unterschiede zum ersten Ausführungsbeispiel beschrieben.

Der Unterschied zwischen dem ersten Ausführungsbeispiel (Figur 1) und dem zweiten Ausführungsbeispiel (Figur 2) liegt in der Gestaltung der Bypasseinheit 12. Während die Bypasseinheit 12 gemäß dem ersten Ausführungsbeispiel 2/2-Wege-Ventile, nämlich das 2/2-Wege-Bypassventil 22 und das 2/2-Wege-Auslassventil 25 nutzt, ist diese Schaltung im zweiten Ausführungsbeispiel (Figur 2) durch ein einziges pneumatisch gesteuertes Bypassventil 18 ersetzt, das als 3/2-Wege-Bypassventil 28 ausgebildet ist. Das 3/2-Wege-Bypassventil 28 dient also zur Be- und Entlüftung der Bypasseinheit 12. Dazu weist das 3/2-Wege-Bypassventil 28 einen ersten Bypass-Ventilanschluss 28.1, einen zweiten Bypass-Ventilanschluss 28.2 und einen dritten Bypass-Ventilanschluss 28.3 auf. Der erste Bypass-Ventilanschluss 28.1 ist über die dritte pneumatische Leitung 50 mit dem Vorratsanschluss 2 verbunden. Der zweite Bypass-Ventilanschluss 28.2 ist mit der ersten pneumatischen Bypassleitung 26 verbunden. Der dritte Bypass-Ventilanschluss 28.3 ist mit einer Entlüftung 5 oder der zentralen Entlüftung des elektropneumatischen Feststellbremsmoduls 1 verbunden. Weiterhin weist das 3/2-Wege-Bypassventil 28 einen Bypassventil-Steuereingang 29 auf, an dem der Bypass-Ventilsteuerdruck pF18 ausgesteuert ist. Dazu zweigt wie bei ersten Ausführungsbeispiel die Bypassventil-Steuerleitung 54 von der ersten pneumatischen Bypassleitung 26 ab. Zwischen der Abzweigstelle der Bypassventil-Steuerleitung 54 und dem zweiten Bypass-Ventilanschluss 28.2 ist die erste Drossel 20 angeordnet.

In Abhängigkeit des Bypassventil-Steuerdrucks pS18 ist das 3/2-Wege-Bypassventil 28 entweder in der ersten in Figur 2 gezeigten Schaltstellung, oder der zweiten in Figur 2 nicht gezeigten Schaltstellung. In der ersten in Figur 2 gezeigten Schaltstellung ist das 3/2-Wege-Bypassventil 28 dann, wenn der Bypassventil-Steuerdruck pS18 den Bypassventil-Schwellwert unterschreitet. Dies ist insbesondere dann der Fall, wenn die Federspeicherbremszylinder 6 entlüftet sind. In diesem Fall ist der Federspeicherbremsdruck pF niedrig oder entspricht dem Umgebungsdruck und das Umschaltventil 14 ist in der in Figur 2 gezeigten ersten Schaltstellung. Der Federspeicherbremsdruck pF wird folglich über das Umschaltventil 14 in die erste pneumatische Bypassleitung 26 als äquivalenter Druck p26 ausgesteuert, und über die Bypassventil-Steuerleitung 54 als Bypassventil-Steuerdruck pS18 an dem pneumatischen Bypassventil-Steuereingang 29 bereitgestellt.

Wird nun der Federspeicherbremszylinder 6 belüftet, indem das Umschaltventil 14 und das erste 3/2-Wege-Ventil 16 jeweils in ihre zweiten Schaltstellungen gebracht werden, und wird nach Belüftung das Umschaltventil 14 wieder stromlos geschaltet, liegt ein hoher Federspeicherbremsdruck pF als äquivalenter Druck p26 in der ersten pneumatischen Bypassleitung 26 an und der Bypass-ventil-Steuerdruck pS18 ist entsprechend hoch. In diesem Fall überschreitet der Bypassventil-Steuerdruck pS18 den Bypassventil-Schwellwert und das 3/2-Wege-Bypassventil 28 wird in die zweite in Figur 2 nicht gezeigte Schaltstellung verbracht. In der zweiten in Figur 2 nicht gezeigten Schaltstellung wird zusätzlich der Vorratsdruck pV über da 3/2-Wege-Bypassventil 28, die erste Drossel 20, die erste pneumatische Bypassleitung 26, das Umschaltventil 14 und die Federspeicherbremsdruckleitung 48 an dem Federspeicheranschluss 4 bereitgestellt. So kann der belüftete Zustand der Federspeicherbremszylinder 6 aufrechterhalten werden.

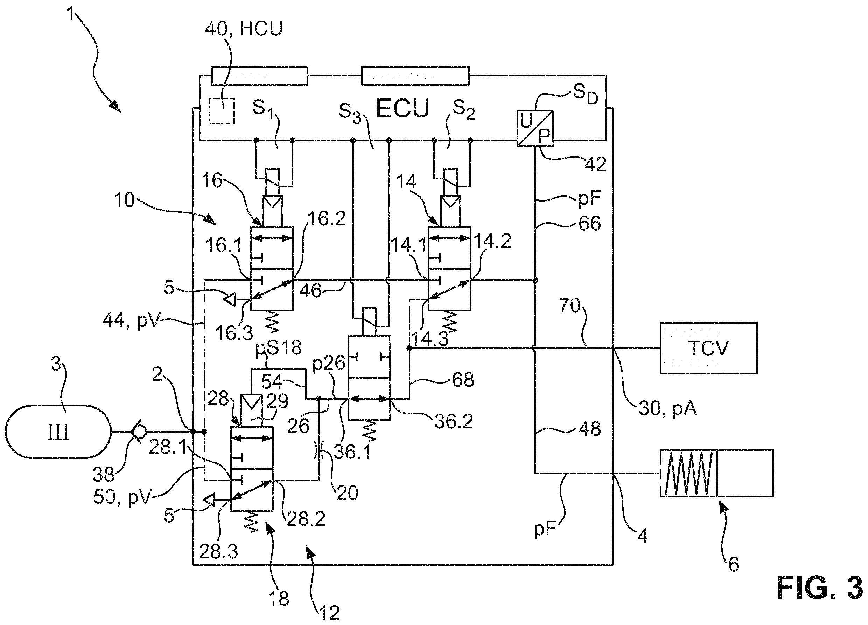

Im dritten Ausführungsbeispiel (Figur 3) ist nun der wesentliche Unterschied zum zweiten Ausführungsbeispiel (Figur 2) darin zu sehen, dass das Anhängerventil 32 zwischen die Bypasseinheit 12 und die Einlass-Auslass-Ventileinheit 10 geschaltet ist. Genauer gesagt ist das Anhängerventil 32 zwischen die Bypasseinheit 12 und das Umschaltventil 14 geschaltet. Insofern ist die vierte pneumatische Leitung 62 entfallen. Das Anhängerventil 32 ist als weiterer Unterschied nicht als 3/2-Wege-Ventil 34 ausgebildet, sondern als 2/2-Wege-Anhänger-Ventil 32. Ein Vorteil dieser Ausführungsform (Figur 3) liegt also darin, dass das 3/2-Wege-Anhängerventil durch ein 2/2-Wege-Anhängerventil ersetzt werden kann, und somit das elektropneumatische Feststellbremsmodul 1 kostengünstiger hergestellt werden kann.

Das 2/2-Wege-Anhängerventil 36 weist einen ersten Anhängerventilanschluss 36.1 und einen zweiten Anhängerventilanschluss 36.2 auf. Der erste Anhängerventilanschluss 36.1 ist mit der ersten pneumatischen Bypassleitung 26 verbunden und der zweite Anhängerventilanschluss 36.2 ist mit einer zweiten pneumatischen Bypassleitung 68 verbunden. Diese ist ihrerseits mit dem dritten Umschaltventilanschluss 14.3 verbunden. Das 2/2-Wege-Anhängerventil 36 ist also in die erste pneumatische Bypassleitung 26 eingesetzt und zwischen die Bypasseinheit 12 und den dritten Umschaltventilanschluss 14.3 geschaltet. Das 2/2-Wege-Anhängerventil 36 ist stromlos offen.

Von der zweiten pneumatischen Bypassleitung 68 zweigt nun in dieser Ausführungsform (Figur 3) eine fünfte pneumatische Leitung 70 ab. Sobald das Umschaltventil 14 in der ersten Schaltstellung (in Figur 3 gezeigt) ist, ist der Federspeicheranschluss 4 über das Umschaltventil 14 und die fünfte pneumatische Leitung 70 mit dem Anhängersteueranschluss 30 verbunden und der Federspeicherbremsdruck pF kann an dem Anhängersteueranschluss 30 als Anhängersteuerdruck pA ausgesteuert werden. Stromlos ist das Anhängerventil 32 offen, sodass wiederum abhängig vom Bypassventil-Steuerdruck pS18 der Belüftungs- bzw. Entlüftungszustand der Federspeicherbremszylinder 6 aufrechterhalten werden kann.

In diesem dritten Ausführungsbeispiel (Figur 3) ist die Anhängerkontrollstellungsfunktion unterschiedlich zu den vorherigen Ausführungsbeispielen (Figuren 1, 2) ausgebildet: Die Anhängerkontrollstellungsfunktion kann nur ausgehend von einem gelösten Federspeicherbremszylinder 6, das heißt von einem Belüftungszustand aus ausgeführt werden. Um dies zu erreichen, wird das 2/2-Wege-Anhängerventil 36 mittels des dritten Stellsignals S3 in die zweite Schaltstellung (in Figur 3 nicht gezeigt) verbracht, sodass der erste und zweite Anhängerventilanschluss 36.1, 36.2 getrennt sind. Anschließend wird das Umschaltventil 14 in die zweite in Figur 3 nicht gezeigte Schaltstellung verbracht, sodass der zweite Umschaltventilanschluss 14.2 mit dem ersten Umschaltventilanschluss 14.1 verbunden ist. Das erste 3/2-Wege-Ventil 16 ist in der ersten in Figur 3 gezeigten Schaltstellung und der zweite Anschluss 16.2 ist mit dem dritten Anschluss 16.3 verbunden. Der Federspeicheranschluss 4 und somit der Federspeicherbremszylinder 6, der daran angeschlossen ist, kann entlüftet werden. Da gleichzeitig keine Verbindung zwischen dem Federspeicheranschluss 4 und dem Anhängersteueranschluss 30 besteht, da das Umschaltventil 14 in der zweiten in Figur 3 nicht gezeigten Schaltstellung ist, bleibt der Anhängersteueranschluss 30 belüftet, auch wenn der Federspeicheranschluss 4 bereits entlüftet ist. In diesem Zustand sind die Federspeicherbremszylinder 6 zugespannt, aber die Betriebsbremsen des Anhängerwagens noch offen. Die Anhängerkontrollstellung kann durchgeführt werden und der Fahrzeugführer kann prüfen, ob die Motorwagen-Anhängerkombination auch ohne eingelegte Betriebsbremsen des Anhängerwagens sicher steht. Ist diese Prüfung abgeschlossen, kann nunmehr auch das 2/2-Wege-Anhängerventil 36 stromlos geschaltet werden und so in die erste in Figur 3 gezeigte Schaltstellung verbracht werden. Der Anhängersteueranschluss 30 wird dann über die Bypasseinheit 12 entlüftet und die Betriebsbremsen des Anhängerwagens werden zugespannt.

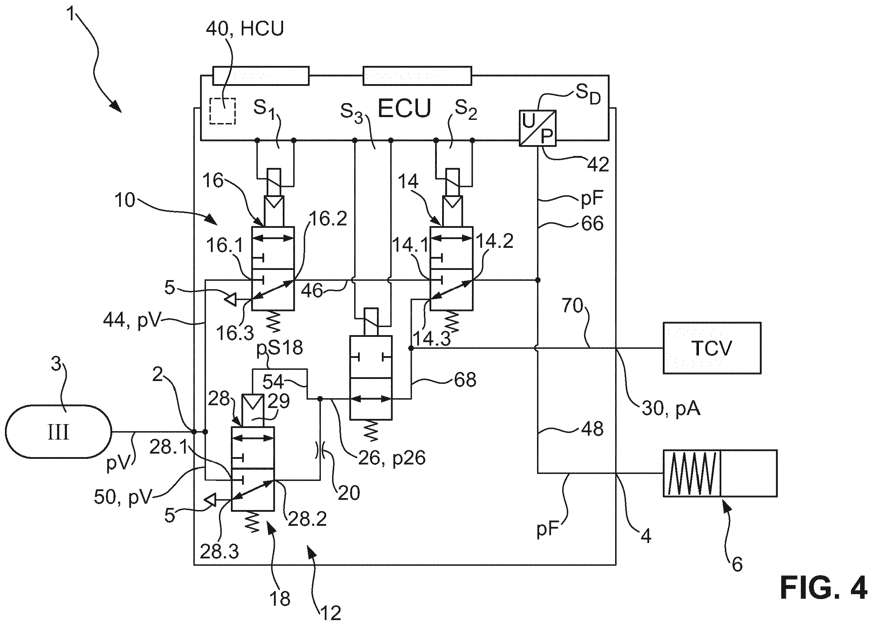

Der Unterschied im vierten Ausführungsbeispiel (Figur 4) zum dritten Ausführungsbeispiel (Figur 3) besteht darin, dass kein Rückschlagventil 38 für den Vorratsanschluss 2 vorgesehen ist. In den ersten drei Ausführungsbeispielen (Figuren 1 bis 3) ist jeweils ein Rückschlagventil zwischen dem Druckluftvorrat 3 und dem Vorratsanschluss 2 vorgesehen. Das Rückschlagventil 38 kann ebenso stromabwärts von dem Vorratsanschluss 2 angeordnet sein. Das Rückschlagventil 38 dient in der Regel der Sicherheit und dazu, dass die Federspeicherbremszylinder 6 nicht einen Druck entgegen der üblichen Richtung in dem Druckluftvorrat 3 aussteuern können.

Die Ausführungsform gemäß Figur 4 hat allerdings den Vorteil, dass die Federspeicherbremszylinder 6 auch entlüftet werden können, indem der Vorratsdruck pV heruntergepumpt wird. Dies kann dann vorteilhaft sein, wenn ein Fehler in dem elektropneumatischen Feststellbremsmodul 1 vorliegt und einzelne oder mehrere Ventile nicht mehr richtig schalten. In einem solchen Fall kann der Druckluftvorrat 3 vollständig über ein Sicherheitsventil (nicht gezeigt) entlüftet werden, um so die Federspeicherbremszylinder 6 zu entlüften und somit zuzuspannen.

### Bezugszeichenliste (Bestandteil der Beschreibung)

- 1: elektropneumatisches Feststellbremsmodul
- 2: Vorratsanschluss
- 3: Druckluftvorrat
- 4: Federspeicheranschluss
- 5: Entlüftung
- 6: Federspeicherbremszylinder
- 10: Einlass-Auslass-Ventileinheit
- 12: Bypasseinheit
- 14: Umschaltventil
- 14.1: erster Umschaltventil-Anschluss
- 14.2: zweiter Umschaltventil-Anschluss
- 14.3: dritter Umschaltventil-Anschluss
- 16: erstes 3/2-Wege-Ventil
- 16.1: erster Anschluss
- 16.2: zweiter Anschluss
- 16.3: dritter Anschluss
- 18: pneumatisch gesteuertes Bypassventil
- 20: erste Drossel
- 21: pneumatischer Bypassventil-Steuereingang
- 22: 2/2-Wege-Bypassventil
- 22.1: erster Bypassventilanschluss
- 22.2: zweiter Bypassventilanschluss
- 24: Auslassventil
- 24.1: erster Auslassventilanschluss
- 24.2: zweiter Auslassventilanschluss
- 24.3: Auslassventil-Steuereingang
- 25: 2/2-Wege-Auslassventil
- 26: erste pneumatische Bypassleitung
- 28: 3/2-Wege-Bypassventil
- 28.1: erster Bypassventilanschluss
- 28.2: zweiter Bypassventilanschluss
- 28.3: dritter Bypassventilanschluss
- 29: pneumatischer Bypassventil-Steuereingang
- 30: Anhängersteueranschluss
- 32: Anhängerventil
- 34: 3/2-Wege-Anhängerventil
- 34.1: erster Anhängerventilanschluss
- 34.2: zweiter Anhängerventilanschluss
- 34.3: dritter Anhängerventilanschluss
- 36: 2/2-Wege-Anhängerventil
- 36.1: erster Anhängerventilanschluss
- 36.2: zweiter Anhängerventilanschluss
- 38: Rückschlagventil
- 40: elektrischer Anschluss
- 42: Drucksensor
- 44: erste pneumatische Leitung
- 46: zweite pneumatische Leitung
- 48: Federspeicherbremsdruckleitung
- 50: dritte pneumatische Leitung
- 52: erste Bypass-Abzweigleitung
- 54: Bypassventil-Steuerleitung
- 56: zweite Bypass-Abzweigleitung
- 58: zweite Drossel
- 60: Auslassventil-Steuerleitung
- 62: vierte pneumatische Leitung
- 64: Federspeicherabzweigleitung
- 66: Messleitung
- 68: zweite pneumatische Bypassleitung
- 70: fünfte pneumatische Leitung
- p26: mit dem Federspeicherbremsdruck äquivalenter Druck
- pA: Anhängersteuerdruck
- pF: Federspeicherbremsdruck
- pS18: Bypassventil-Steuerdruck
- pS24: Auslassventil-Steuerdruck
- S1: erstes Schaltsignal
- S2: zweites Schaltsignal
- S3: drittes Schaltsignal
- SD: Drucksignal

## Patentansprüche

1. Elektropneumatisches Feststellbremsmodul (1), mit
einem Vorratsanschluss (2) zum Anschließen eines Druckluftvorrats (3),
wenigstens einem Federspeicheranschluss (4) zum Anschließen wenigstens eines Federspeicherbremszylinders (6),
einer elektropneumatischen Einlass-Auslass-Ventileinheit (10), die wenigstens eine erste Schaltstellung und eine zweite Schaltstellung einnehmen kann,
und einer pneumatisch gesteuerten Bypasseinheit (12) zum Aufrechterhalten eines Belüftungszustands beziehungsweise Entlüftungszustands von an den Federspeicheranschluss (4) angeschlossenen Federspeicherbremszylindern (6) in einem stromlosen Zustand der elektropneumatischen Einlass-Auslass-Ventileinheit (10),
wobei in der ersten Schaltstellung der Einlass-Auslass-Ventileinheit (10) der Vorratsanschluss (2) zur Aussteuerung eines Federspeicherbremsdrucks (pF) mit dem Federspeicheranschluss (4) verbunden ist und in der zweiten Schaltstellung der Einlass-Auslass-Ventileinheit (10) der Federspeicheranschluss (4) mit einer Entlüftung (5) der Einlass-Auslass-Ventileinheit (10) verbunden ist,
wobei in einer dritten Schaltstellung der Einlass-Auslass-Ventileinheit (10) der Federspeicheranschluss (4) mit der Bypasseinheit (12) verbunden ist und die Bypasseinheit (12) dazu eingerichtet ist, abhängig von dem Federspeicherbremsdruck (pF) am Federspeicheranschluss (4) den Federspeicheranschluss (4) zum Belüften mit dem Vorratsanschluss (2) oder zum Entlüften mit einer Entlüftung (5) zu verbinden, **dadurch gekennzeichnet, dass** das Be- und Entlüften des Federspeicheranschlusses (4) über die Bypasseinheit (12) gedrosselt erfolgt.

2. Elektropneumatisches Feststellbremsmodul (1) nach Anspruch 1, wobei die Einlass-Auslass-Ventileinheit (10) ein Umschaltventil (14) aufweist, welches in einer ersten Schaltstellung das Durchsteuern des Federspeicherbremsdrucks (pF) direkt von dem Vorratsanschluss (2) an den Federspeicheranschluss (4) erlaubt, und in einer zweiten Schaltstellung den Federspeicheranschluss (4) mit der Bypasseinheit (12) verbindet, wobei das Umschaltventil (14) stromlos in der zweiten Schaltstellung ist.

3. Elektropneumatisches Feststellbremsmodul (1) nach einem der vorstehenden Ansprüche, wobei die Einlass-Auslass-Ventileinheit (10) ein erstes 3/2-Wege-Ventil (16) aufweist, welches in einer ersten Schaltstellung das Durchsteuern des Federspeicherbremsdrucks (pF) direkt von dem Vorratsanschluss (2) an den Federspeicheranschluss (4) erlaubt, und in einer zweiten Schaltstellung eine Verbindung des Federspeicheranschlusses (4) mit einer Entlüftung (5) erlaubt, wobei das erste 3/2-Wege-Ventil (16) stromlos in der zweiten Schaltstellung ist.

4. Elektropneumatisches Feststellbremsmodul (1) nach Anspruch 2 und 3, wobei
- das erste 3/2-Wege-Ventil (16) einen mit dem Vorratsanschluss (2) verbundenen ersten Anschluss (16.1), einen zweiten Anschluss (16.2) und einen mit der Entlüftung (5) verbundenen dritten Anschluss (16.3) aufweist, wobei in der ersten Schaltstellung der erste und der zweite Anschluss (16.1, 16.2) verbunden sind, und in der zweiten Schaltstellung der dritte und der zweite Anschluss (16.3, 16.2) verbunden sind;
- das Umschaltventil (14) einen ersten Umschaltventil-Anschluss (14.1), einen mit dem Federspeicheranschluss (4) verbundenen zweiten Umschaltventil-Anschluss (14.2) und einen mit der Bypasseinheit (12) verbindbaren oder verbundenen dritten Umschaltventil-Anschluss (14.3) aufweist, wobei in der ersten Schaltstellung der erste und zweite Umschaltventil-Anschluss (14.1, 14.2) verbunden sind, und in der zweiten Schaltstellung der dritte und der zweite Umschaltventil-Anschluss (14.4, 14.2) verbunden sind;
wobei der erste Umschaltventil-Anschluss (14.1) mit dem zweiten Anschluss (16.2) des ersten 3/2-Wege-Ventils (16) verbunden ist.

5. Elektropneumatisches Feststellbremsmodul (1) nach Anspruch 2 und 3, wobei die Bypasseinheit (12) als Bypass zum ersten 3/2-Wege-Ventil (16) zwischen den Vorratsanschluss (2) und das Umschaltventil (14) geschaltet ist.

6. Elektropneumatisches Feststellbremsmodul (1) nach einem der vorstehenden Ansprüche, wobei die Bypasseinheit (12) wenigstens eine erste Drossel (20) aufweist.

7. Elektropneumatisches Feststellbremsmodul (1) nach einem der vorstehenden Ansprüche, wobei die Bypasseinheit (12) wenigstens ein pneumatisch gesteuertes Bypassventil (18) aufweist.

8. Elektropneumatisches Feststellbremsmodul (1) nach Anspruch 7, wobei das pneumatisch gesteuerte Bypassventil (18) als 2/2-Wege-Bypassventil (22) ausgebildet ist, und einen mit dem Vorratsanschluss (2) verbundenen ersten Bypassventilanschluss (22.1), einen mit der Einlass-Auslass-Ventileinheit (10) verbundenen oder verbindbaren zweiten Bypassventilanschluss (22.2), und einen pneumatischen Bypassventil-Steuereingang (21) aufweist.

9. Elektropneumatisches Feststellbremsmodul (1) nach Anspruch 8, wobei die Bypasseinheit (12) ein Auslassventil (24) aufweist zum Entlüften der Bypasseinheit (12).

10. Elektropneumatisches Feststellbremsmodul (1) nach Anspruch 9, wobei das Auslassventil (24) als 2/2-Wegeventil (25) ausgebildet ist, und einen mit einer ersten pneumatischen Bypassleitung (26) verbundenen ersten Auslassventilanschluss (24.1) und einen mit einer Entlüftung (5) verbundenen zweiten Auslassventilanschluss (24.2) aufweist.

11. Elektropneumatisches Feststellbremsmodul (1) nach Anspruch 9 oder 10, wobei das Auslassventil (24) einen pneumatischen Auslassventil-Steuereingang (24.3) aufweist und als Auslassventil-Steuerdruck (pS24) der Federspeicherbremsdruck (pF) oder ein mit diesem äquivalenten Druck (p26) an dem Auslassventil-Steuereingang (24.3) aussteuerbar ist.

12. Elektropneumatisches Feststellbremsmodul (1) nach Anspruch 8, wobei an dem pneumatischen Bypassventil-Steuereingang (21) als Bypassventil-Steuerdruck (pS18) der Federspeicherbremsdruck (pF) oder ein mit diesem äquivalenten Druck (p26) aussteuerbar ist.

13. Elektropneumatisches Feststellbremsmodul (1) nach Anspruch 7, wobei das pneumatisch gesteuerte Bypassventil (18) als 3/2-Wege-Bypassventil (28) ausgebildet ist, und einen mit dem Vorratsanschluss (2) verbundenen ersten Bypassventilanschluss (28.1), einen mit der Einlass-Auslass-Ventileinheit (10) verbundenen oder verbindbaren zweiten Bypassventilanschluss (28.2), einen mit einer Entlüftung (5) verbundenen dritten Bypassventilanschluss (28.3) und einen pneumatischen Bypassventil-Steuereingang (29) aufweist, wobei in einer ersten Schaltstellung des 3/2-Wege-Bypassventils (28) der dritte und zweite Bypassventilanschluss (28.3, 28.2) verbunden sind und in einer zweiten Schaltstellung des 3/2-Wege-Bypassventils (28) der erste und zweite Bypassventilanschluss (28.1, 28.2) verbunden sind.

14. Elektropneumatisches Feststellbremsmodul (1) nach Anspruch 13, wobei an dem pneumatischen Bypassventil-Steuereingang (29) als Bypassventil-Steuerdruck (pS18) der Federspeicherbremsdruck (pF) oder ein mit diesem äquivalenten Druck (p26) aussteuerbar ist.

15. Elektropneumatisches Feststellbremsmodul (1) nach einem der vorstehenden Ansprüche, mit einem Anhängersteueranschluss (30) zum Anschließen eines Anhängersteuerventils (TCV), wobei an dem Anhängersteueranschluss (30) der Federspeicherbremsdruck (pF) aussteuerbar ist.

16. Elektropneumatisches Feststellbremsmodul (1) nach Anspruch 15, wobei dem Anhängersteueranschluss (30) ein Anhängerventil (32) vorgeschaltet ist zum Durchführen einer Anhängerkontrollstellungsfunktion.

17. Elektropneumatisches Feststellbremsmodul (1) nach Anspruch 16, wobei das Anhängerventil (32) als 3/2-Wege-Anhängerventil (34) ausgebildet ist, und einen mit dem Vorratsanschluss (2) verbundenen ersten Anhängerventilanschluss (34.1), einen mit dem Anhängersteueranschluss (30) verbundenen zweiten Anhängerventilanschluss (34.2) und einen mit dem Federspeicheranschluss (4) verbundenen dritten Anhängerventilanschluss (34.3) aufweist.

18. Elektropneumatisches Feststellbremsmodul (1) nach Anspruch 16, wobei das Anhängerventil (32) in der Bypasseinheit (12) verschaltet ist.

19. Elektropneumatisches Feststellbremsmodul (1) nach Anspruch 7, mit einem Anhängersteueranschluss (30) zum Anschließen eines Anhängersteuerventils (TCV), wobei an dem Anhängersteueranschluss (30) der Federspeicherbremsdruck (pF) aussteuerbar ist, wobei dem Anhängersteueranschluss (30) ein Anhängerventil (32) vorgeschaltet ist zum Durchführen einer Anhängerkontrollstellungsfunktion, wobei das Anhängerventil (32) in der Bypasseinheit (12) verschaltet ist und wobei das Anhängerventil (32) zwischen das pneumatisch gesteuertes Bypassventil (18) und die Einlass-Auslass-Ventileinheit (10) geschaltet ist.

20. Elektropneumatisches Feststellbremsmodul (1) nach Anspruch 16, 18 oder 19, wobei das Anhängerventil (32) als 2/2-Wege-Ventil (36) ausgebildet ist und einen ersten Anhängerventilanschluss (36.1) und einen zweiten Anhängerventilanschluss (36.2) aufweist.

21. Elektropneumatisches Feststellbremsmodul (1) nach Anspruch 20, wobei der erste Anhängerventilanschluss (36.1) mit der ersten Bypassleitung (26) und der zweite Anhängerventilanschluss (36.2) mit dem dritten Umschaltventilanschluss (14.3) und/oder dem Anhängersteueranschluss (30) verbunden ist.

22. Elektropneumatisches Feststellbremsmodul (1) nach einem der vorstehenden Ansprüche, wobei dem Vorratsanschluss (2) ein Rückschlagventil (38) vor- oder nachgeschaltet ist.

23. Elektropneumatisches Feststellbremsmodul (1) nach einem der vorstehenden Ansprüche, aufweisend eine elektrische Steuereinheit (ECU) mit einem elektrischen Anschluss (40) zum Empfangen von Feststellbremssignalen (HCU) und zum Bereitstellen entsprechender Schaltsignale (S1, S2, S3) wenigstens an die Einlass-Auslass-Ventileinheit (10).

24. Elektropneumatisches Feststellbremsmodul (1) nach einem der vorstehenden Ansprüche, aufweisend einen Drucksensor (42), der dazu vorgesehen ist, den Federspeicherbremsdruck (pF) zu erfassen und ein entsprechendes Signal (SD) bereitzustellen.

## Claims

1. An electropneumatic parking brake module (1), having
a supply port (2) for connecting a compressed air supply (3),
at least one spring-loaded port (4) for connecting at least one spring-loaded brake cylinder (6),
an electropneumatic inlet-outlet-valve unit (10), which can occupy at least a first switching position and a second switching position,
and a pneumatically controlled bypass unit (12) to maintain an aeration or ventilation state of spring-loaded brake cylinders (6) connected to the spring-loaded port (4) in a currentless state of the electropneumatic inlet-outlet valve unit (10),
wherein in the first switching position of the inlet-outlet valve unit (10) the supply port (2) is connected to the spring-loaded port (4) for outputting a spring-loaded brake pressure (pF) and in the second switching position of the inlet-outlet valve unit (10) the spring-loaded port (4) is connected to a vent (5) of the inlet-outlet valve unit (10),
wherein in a third switching position of the inlet-outlet valve unit (10) the spring-loaded port (4) is connected to the bypass unit (12) and the bypass unit (12) is set up, depending on the spring-loaded brake pressure (pF) on the spring-loaded port (4), to connect the spring-loaded port (4) to the supply port (2) for aeration or to connect it to a vent (5) for venting, **characterized in that** the aeration and ventilation of the spring-loaded port (4) occurs in a throttled manner via the bypass unit (12).

2. The electropneumatic parking brake module (1) according to claim 1, wherein the inlet-outlet valve unit (10) comprises a switchover valve (14), which in a first switching position permits the activation of the spring-loaded brake pressure (pF) directly from the supply port (2) to the spring-loaded port (4), and in a second switching position connects the spring-loaded port (4) to the bypass unit (12), wherein the switchover valve (14) is currentless in the second switching position.

3. The electropneumatic parking brake module (1) according to any of the foregoing claims, wherein the inlet-outlet valve unit (10) comprises a first 3/2-way valve (16), which in a first switching position permits the activation of the spring-loaded brake pressure (pF) directly from the supply port (2) to the spring-loaded port (4), and in a second switching position permits a connection of the spring-loaded port (4) to a vent (5), wherein the first 3/2-way valve (16) is currentless in the second position.

4. The electropneumatic parking brake module (1) according to claim 2 and 3, wherein
- the first 3/2-way valve (16) comprises a first port (16.1) connected to the supply port (2), a second port (16.2) and a third port (16.3) connected to the vent (5), wherein in the first switching position the first and the second port (16.1, 16.2) are connected, and in the second switching position the third and the second port (16.3, 16.2) are connected;
- the switchover valve (14) comprises a first switchover valve port (14.1), a second switchover valve port (14.2) connected to the spring-loaded port (4) and a third switchover valve port (14.3) connectable or connected to the bypass unit (12), wherein in the first switching position the first and second switchover valve port (14.1, 14.2) are connected, and in the second switching position the third and the second switchover valve port (14.4, 14.2) are connected,
wherein the first switchover valve port (14.1) is connected to the second port (16.2) of the first 3/2-way valve (16).

5. The electropneumatic parking brake module (1) according to claim 2 and 3, wherein the bypass unit (12) is switched as a bypass to the first 3/2-way valve (16) between the supply port (2) and the switchover valve (14).

6. The electropneumatic parking brake module (1) according to any of the foregoing claims, wherein the bypass unit (12) comprises at least a first throttle (20).

7. The electropneumatic parking brake module (1) according to any of the foregoing claims, wherein the bypass unit (12) comprises at least one pneumatically controlled bypass valve (18) .

8. The electropneumatic parking brake module (1) according to claim 7, wherein the pneumatically controlled bypass valve (18) is configured as a 2/2 bypass valve (22), and comprises a first bypass valve port (22.1) connected to the supply port (2), a second bypass valve port (22.2) connected or connectable to the inlet-outlet valve unit (10), and a pneumatic bypass valve control input (21).

9. The electropneumatic parking brake module (1) according to claim 8, wherein the bypass unit (12) comprises an outlet valve (24) for venting the bypass unit (12).

10. The electropneumatic parking brake module (1) according to claim 9, wherein the outlet valve (24) is configured as a 2/2-way valve (25), and comprises a first outlet valve port (24.1) connected to a first pneumatic bypass line (26) and a second outlet valve port (24.2) connected to a vent (5).

11. The electropneumatic parking brake module (1) according to claim 9 or 10, wherein the outlet valve (24) comprises a pneumatic outlet valve control input (24.3) and the spring-loaded brake pressure (pF) or an equivalent pressure (p26) at the outlet valve control input (24.3) can be output as outlet valve control pressure (pS24).

12. The electropneumatic parking brake module (1) according to claim 8, wherein the spring-loaded brake pressure (pF) or an equivalent pressure (p26) can be output at the pneumatic bypass valve control input (21) as bypass valve control pressure (pS18) .

13. The electropneumatic parking brake module (1) according to claim 7, wherein the pneumatically controlled bypass valve (18) is configured as a 3/2-way bypass valve (28), and comprises a first bypass valve port (28.1) connected to the supply port (2), a second bypass valve port (28.2) connected or connectable to the inlet-outlet valve unit (10), a third bypass valve port (28.3) connected to a vent (5) and a pneumatic bypass valve control input (29), wherein in a first switching position of the 3/2-way bypass valve (28) the third and second bypass valve port (28.3, 28.2) are connected and in a second switching position of the 3/2-way bypass valve (28) the first and second bypass valve port (28.1, 28.2) are connected.

14. The electropneumatic parking brake module (1) according to claim 13, wherein the spring-loaded brake pressure (pF) or an equivalent pressure (p26) can be output at the pneumatic bypass valve control input (29) as bypass valve control pressure (pS18) .

15. The electropneumatic parking brake module (1) according to any of the foregoing claims, having a trailer control port (30) for connecting a trailer control valve (TCV), wherein the spring-loaded brake pressure (pF) can be output at the trailer control port (30).

16. The electropneumatic parking brake module (1) according to claim 15, wherein a trailer valve (32) is arranged upstream of the trailer control port (30) for carrying out a trailer control position function.

17. The electropneumatic parking brake module (1) according to claim 16, wherein the trailer valve (32) is configured as a 3/2-way trailer valve (34) and a first trailer valve port (34.1) is connected to the supply port (2), a second trailer valve port (34.2) is connected to the trailer control port (30) and a third trailer valve port (34.3) is connected to the spring-loaded port (4) .

18. The electropneumatic parking brake module (1) according to claim 16, wherein the trailer valve (32) is wired in the bypass unit (12).

19. The electropneumatic parking brake module (1) according to claim 7, having a trailer control port (30) for connecting a trailer control valve (TCV), wherein the spring-loaded brake pressure (pF) can be output at the trailer control port (30), wherein a trailer valve (32) is arranged upstream of the trailer control port (30) for carrying out a trailer control position function, wherein the trailer valve (32) is wired in the bypass unit (12) and wherein the trailer valve (32) is connected between the pneumatically controlled bypass valve (18) and the inlet-outlet valve unit (10).

20. The electropneumatic parking brake module (1) according to claim 16, 18 or 19, wherein the trailer valve (32) is configured as a 2/2-way valve (36) and comprises a first trailer valve port (36.1) and a second trailer valve port (36.2).

21. The electropneumatic parking brake module (1) according to claim 20, wherein the first trailer valve port (36.1) is connected to the first bypass line (26) and the second trailer valve port (36.2) is connected to the third valve port (14.3) and/or to the trailer control port (30).

22. The electropneumatic parking brake module (1) according to any of the foregoing claims, wherein a check valve (38) is arranged upstream or downstream of the supply port (2).

23. The electropneumatic parking brake module (1) according to any of the foregoing claims, comprising an electric control unit (ECU) having an electrical connection (40) for receiving parking brake signals (HCU) and for providing corresponding switching signals (S1, S2, S3) at least to the inlet-outlet valve unit (10).

24. The electropneumatic parking brake module (1) according to any of the foregoing claims, comprising a pressure sensor (42), which is provided to detect the spring-loaded brake pressure (pF) and to provide a corresponding signal (SD).

## Revendications

1. Module de frein de stationnement électropneumatique (1), avec
un raccord de réserve (2) pour le raccordement d'une réserve d'air comprimé (3),
au moins un raccord d'accumulateur à ressort (4) pour le raccordement d'au moins un cylindre de frein à ressort (6),
une unité de soupape d'admission-d'échappement (10) électropneumatique, qui peut occuper au moins une première position de commutation et une deuxième position de commutation,
et une unité de dérivation (12) à commande pneumatique pour le maintien d'un état d'aération ou état de ventilation de cylindres de frein à ressort (6) raccordés au raccord d'accumulateur à ressort (4) dans un état sans courant de l'unité de soupape d'admission-d'échappement (10) électropneumatique,
dans lequel dans la première position de commutation de l'unité de soupape d'admission-d'échappement (10) le raccord de réserve (2) est relié au raccord d'accumulateur à ressort (4) pour la modulation d'une pression de frein à ressort (pF) et dans la deuxième position de commutation de l'unité de soupape d'admission-d'échappement (10) le raccord d'accumulateur à ressort (4) est relié à une ventilation (5) de l'unité de soupape d'admission-d'échappement (10),
dans lequel dans une troisième position de commutation de l'unité de soupape d'admission-d'échappement (10) le raccord d'accumulateur à ressort (4) est relié à l'unité de dérivation (12) et l'unité de dérivation (12) est conçue, en fonction de la pression de frein à ressort (pF) sur le raccord d'accumulateur à ressort (4), pour relier le raccord d'accumulateur à ressort (4) au raccord de réserve (2) pour l'aération ou à une ventilation (5) pour la ventilation,**caractérisé en ce que** l'aération et la ventilation du raccord d'accumulateur à ressort (4) s'effectue de manière réduite par l'intermédiaire de l'unité de dérivation (12).

2. Module de frein de stationnement électropneumatique (1) selon la revendication 1, dans lequel l'unité de soupape d'admission-d'échappement (10) présente une soupape d'inversion (14), laquelle dans une première position de commutation permet l'activation de la pression de frein à ressort (pF) directement à partir du raccord de réserve (2) sur le raccord d'accumulateur à ressort (4), et dans une deuxième position de commutation relie le raccord d'accumulateur à ressort (4) à l'unité de dérivation (12), dans lequel la soupape d'inversion (14) est sans courant dans la deuxième position de commutation.

3. Module de frein de stationnement électropneumatique (1) selon l'une quelconque des revendications précédentes, dans lequel l'unité de soupape d'admission-d'échappement (10) présente un premier distributeur à 3/2 voies (16), lequel dans une première position de commutation permet l'activation de la pression de frein à ressort (pF) directement à partir du raccord de réserve (2) sur le raccord d'accumulateur à ressort (4), et dans une deuxième position de commutation permet une liaison du raccord d'accumulateur à ressort (4) à une ventilation (5), dans lequel le premier distributeur à 3/2 voies (16) est sans courant dans la deuxième position de commutation.

4. Module de frein de stationnement électropneumatique (1) selon la revendication 2 et 3, dans lequel
- le premier distributeur à 3/2 voies (16) présente un premier raccord (16.1) relié au raccord de réserve (2), un deuxième raccord (16.2) et un troisième raccord (16.3) relié à la ventilation (5), dans lequel dans la première position de commutation le premier et le deuxième raccord (16.1, 16.2) sont reliés, et dans la deuxième position de commutation le troisième et le deuxième raccord (16.3, 16.2) sont reliés ;
- la soupape d'inversion (14) présente un premier raccord de soupape d'inversion (14.1), un deuxième raccord de soupape d'inversion (14.2) relié au raccord d'accumulateur à ressort (4) et un troisième raccord de soupape d'inversion (14.3) pouvant être relié ou relié à l'unité de dérivation (12), dans lequel dans la première position de commutation le premier et deuxième raccord de soupape d'inversion (14.1, 14.2) sont reliés, et dans la deuxième position de commutation le troisième et le deuxième raccord de soupape d'inversion (14.4, 14.2) sont reliés ;
dans lequel le premier raccord de soupape d'inversion (14.1) est relié au deuxième raccord (16.2) du premier distributeur à 3/2 voies (16).

5. Module de frein de stationnement électropneumatique (1) selon la revendication 2 et 3, dans lequel l'unité de dérivation (12) est commutée en tant que dérivation par rapport au premier distributeur à 3/2 voies (16) entre le raccord de réserve (2) et la soupape d'inversion (14).

6. Module de frein de stationnement électropneumatique (1) selon l'une quelconque des revendications précédentes, dans lequel l'unité de dérivation (12) présente au moins un premier étranglement (20).

7. Module de frein de stationnement électropneumatique (1) selon l'une quelconque des revendications précédentes, dans lequel l'unité de dérivation (12) présente au moins une soupape de dérivation (18) à commande pneumatique.

8. Module de frein de stationnement électropneumatique (1) selon la revendication 7, dans lequel la soupape de dérivation (18) à commande pneumatique est réalisée sous la forme d'une soupape de dérivation à 2/2 voies (22), et présente un premier raccord de soupape de dérivation (22.1) relié au raccord de réserve (2), un deuxième raccord de soupape de dérivation (22.2) relié ou pouvant être relié à l'unité de soupape d'admission-d'échappement (10), et une entrée de commande de soupape de dérivation pneumatique (21).

9. Module de frein de stationnement électropneumatique (1) selon la revendication 8, dans lequel l'unité de dérivation (12) présente une soupape d'échappement (24) pour la ventilation de l'unité de dérivation (12).

10. Module de frein de stationnement électropneumatique (1) selon la revendication 9, dans lequel la soupape d'échappement (24) est réalisée sous la forme d'un distributeur à 2/2 voies (25), et présente un premier raccord de soupape d'échappement (24.1) relié à une première conduite de dérivation pneumatique (26) et un deuxième raccord de soupape d'échappement (24.2) relié à une ventilation (5).

11. Module de frein de stationnement électropneumatique (1) selon la revendication 9 ou 10, dans lequel la soupape d'échappement (24) présente une entrée de commande de soupape d'échappement pneumatique (24.3) et la pression de frein à ressort (pF) ou une pression (p26) équivalente à celle-ci sur l'entrée de commande de soupape d'échappement (24.3) peut être modulée en tant que pression de commande de soupape d'échappement (pS24).

12. Module de frein de stationnement électropneumatique (1) selon la revendication 8, dans lequel la pression de frein à ressort (pF) ou une pression (p26) équivalente à celle-ci sur l'entrée de commande de soupape de dérivation pneumatique (21) peut être modulée en tant que pression de commande de soupape de dérivation (pS18).

13. Module de frein de stationnement électropneumatique (1) selon la revendication 7, dans lequel la soupape de dérivation (18) à commande pneumatique est réalisée sous la forme d'une soupape de dérivation à 3/2 voies (28), et présente un premier raccord de soupape de dérivation (28.1) relié au raccord de réserve (2), un deuxième raccord de soupape de dérivation (28.2) relié ou pouvant être relié à l'unité de soupape d'admission-d'échappement (10), un troisième raccord de soupape de dérivation (28.3) relié à une ventilation (5) et une entrée de commande de soupape de dérivation pneumatique (29), dans lequel dans une première position de commutation de la soupape de dérivation à 3/2 voies (28) le troisième et deuxième raccord de soupape de dérivation (28.3, 28.2) sont reliés et dans une deuxième position de commutation de la soupape de dérivation à 3/2 voies (28) le premier et deuxième raccord de soupape de dérivation (28.1, 28.2) sont reliés.

14. Module de frein de stationnement électropneumatique (1) selon la revendication 13, dans lequel la pression de frein à ressort (pF) ou une pression (p26) équivalente à celle-ci sur l'entrée de commande de soupape de dérivation pneumatique (21) peut être modulée en tant que pression de commande de soupape de dérivation (pS18).

15. Module de frein de stationnement électropneumatique (1) selon l'une quelconque des revendications précédentes, avec un raccord de commande de remorque (30) pour le raccordement d'une soupape de commande de remorque (TCV), dans lequel la pression de frein à ressort (pF) sur le raccord de commande de remorque (30) peut être modulée.

16. Module de frein de stationnement électropneumatique (1) selon la revendication 15, dans lequel une soupape de remorque (32) est montée en amont du raccord de commande de remorque (30) pour la mise en œuvre d'une fonction de position de contrôle de remorque.

17. Module de frein de stationnement électropneumatique (1) selon la revendication 16, dans lequel la soupape de remorque (32) est réalisée sous la forme d'une soupape de remorque à 3/2 voies (34), et présente un premier raccord de soupape de remorque (34.1) relié au raccord de réserve (2), un deuxième raccord de soupape de remorque (34.2) relié au raccord de commande de remorque (30) et un troisième raccord de soupape de remorque (34.3) relié au raccord d'accumulateur à ressort (4).

18. Module de frein de stationnement électropneumatique (1) selon la revendication 16, dans lequel la soupape de remorque (32) est branchée dans l'unité de dérivation (12).

19. Module de frein de stationnement électropneumatique (1) selon la revendication 7, avec un raccord de commande de remorque (30) pour le raccordement d'une soupape de commande de remorque (TCV), dans lequel la pression de frein à ressort (pF) peut être modulée sur le raccord de commande de remorque (30), dans lequel une soupape de remorque (32) est montée en amont du raccord de commande de remorque (30) pour la mise en œuvre d'une fonction de position de contrôle de remorque, dans lequel la soupape de remorque (32) est branchée dans l'unité de dérivation (12) et dans lequel la soupape de remorque (32) est commutée entre la soupape de dérivation (18) à commande pneumatique et l'unité de soupape d'admission-d'échappement (10).

20. Module de frein de stationnement électropneumatique (1) selon la revendication 16, 18 ou 19, dans lequel la soupape de remorque (32) est réalisée sous la forme d'une soupape à 2/2 voies (36) et présente un premier raccord de soupape de remorque (36.1) et un deuxième raccord de soupape de remorque (36.2).

21. Module de frein de stationnement électropneumatique (1) selon la revendication 20, dans lequel le premier raccord de soupape de remorque (36.1) est relié à la première conduite de dérivation (26) et le deuxième raccord de soupape de remorque (36.2) au troisième raccord de soupape de dérivation (14.3) et/ou au raccord de commande de remorque (30).

22. Module de frein de stationnement électropneumatique (1) selon l'une quelconque des revendications précédentes, dans lequel un clapet antiretour (38) est monté en amont ou en aval du raccord de réserve (2).

23. Module de frein de stationnement électropneumatique (1) selon l'une quelconque des revendications précédentes, présentant une unité de commande électrique (ECU) avec un raccord électrique (40) pour la réception de signaux de frein de stationnement (HCU) et pour la fourniture de signaux de commutation (S1, S2, S3) correspondants au moins à l'unité de soupape d'admission-d'échappement (10).

24. Module de frein de stationnement électropneumatique (1) selon l'une quelconque des revendications précédentes, présentant un capteur de pression (42), qui est destiné à détecter la pression de frein à ressort (pF) et un signal (SD) correspondant.
